# EUROPEAN PATENT APPLICATION

(11) **EP 2 426 865 A2**
(43) Date of publication of application: **07.03.2012**
(21) Application number: 10769968.8
(22) Date of filing: 29.04.2010
(51) Int. Cl.: H04L 12/28, H04W 4/22, H04W 74/06, H04W 52/02

(54) **TERMINAL APPARATUS, COORDINATOR, AND METHOD FOR MANAGING EMERGENCY EVENTS**

(30) Priority: 29.04.2009 IN CH10022009; 17.03.2010 IN CH07132010
(71) Applicant: Samsung Electronics Co., Ltd., Suwon-si, Gyeonggi-do 442-742 (KR)
(72) Inventor: PATRO, Ranjeet Kumar, Bangalore 560075 (IN); BHATIA, Ashutosh, Bangalore 560075 (IN); NANIYAT, Arun, Bangalore 560076 (IN); ARUNAN, Thenmozhi, Bangalore 560012 (IN); WON, Eun-tae, Seoul 157-015 (KR); PARK, Seung-hoon, Seoul 137-070 (KR)
(74) Representative: Jenkins, Richard Gavin
(86) International application number: PCT/KR2010/002725
(87) International publication number: WO 2010/126323

(57) **Abstract**

The present invention provides an integrated medium access control for processing respectively separated traffic situation sets. Another aim of the present invention is to optimize power consumption during a poll based operation of the medium access control mechanism. An additional aim of the present invention is to provide a poll-based error recovery mechanism for achieving preferred application reliability through power-and cost-efficient methods. A further aim of the present invention is to provide an in-band wakeup method for a medical implant device in a human body area network. Still a further aim of the present invention is to provide a method for a medical implant device in a human body area network. An even further aim of the present invention is to provide a method for simultaneously accessing a power channel of a poll-based minimum level and operating a plurality of BANs in medical implant communications.

## Description

### Technical Field

The present invention relates generally to a communication system in a Body Area Network (BAN), and in particular, to a system and method for a single Medium Access Control (MAC) protocol for a communication system in the BAN, such as error recovery mechanism, low power consumption, emergency message handling and integration aspects.

### Background Art

In a radio access network, communication apparatuses of the network generally communicate (with one another, and/or with other communication apparatuses) using radio transmissions that share the same transmission medium (commonly, the surrounding atmosphere). Although such radio transmissions are normally configured to occupy allocated or assigned frequency bands (also called sub-channels, and which may be divided in time to form "chunks"), the radio-frequency spectrum is nevertheless shared by such transmissions.

The term radio access network encompasses a Wireless Sensor Network (WSN) in which the nodes are sensors of some kind, configured to at least act as transmitters (and sometimes also act as receivers). One special form of wireless sensor network is a so-called Body Area Network or BAN, in which sensors are placed at one or more positions on or in living bodies for the purpose of monitoring medical parameters or bodily activity. Two forms of BAN are MBAN or Medical BAN for use in hospitals and other health-related applications, and Wireless BAN or WBAN, this more general designation also extending to security applications for example.

There exists a need for a power efficient and reliable Medium Access Control (MAC) mechanism for a Body Area Network (BAN) with devices generating multiple class of traffic wherein MAC interfaces to a communication system constituting multiple radios.

### Disclosure

### Technical Problem

The present invention provides an integrated medium access control for handling different sets of disjoint traffic scenarios.

Another object of the invention is to optimize power consumption during poll based operation of the medium access control mechanism.

Yet another object of the invention is to provide a poll based error recovery mechanism to achieve the desired application reliability in a power efficient and cost effective manner.

Further another object of the invention is to provide an in-band wakeup method for medical implant devices in a body area network.

Yet a further object of the invention is to provide a method for handling medical emergency and medical events for implant devices on priority in a body area network.

Yet a further another object of the invention is to provide a method for accessing poll based ultra low power channel and simultaneously operating multiple BANs in medical implant communications.

Yet a further another object of the invention is to provide a low power single medium access control protocol system for a communication system constituting multiple radios, and a method thereof.

### Technical Solution

In accordance with an aspect of the present invention, there is provided a method for managing an emergency event in an end device(=terminal apparatus). The method includes determining whether an emergency event occurs; selecting a channel for transmitting an alarm message indicating occurrence of an emergency event, if the emergency event occurs; transmitting the alarm message to a coordinator using the selected channel; determining whether a response message to the alarm message is received, for a predetermined time; and performing an operation associated with the emergency event if the response message is received.

In accordance with another aspect of the present invention, there is provided a method for managing an emergency event in a coordinator. The method includes transmitting, to a device, a poll message causing the device to transmit data to the coordinator; retransmitting the poll message upon failure to receive data for the poll message; determining whether the number of retransmissions of the poll message exceeds the predetermined maximum number of retransmissions; transitioning to a sleep state for reception of an alarm message indicating occurrence of an emergency event, if the number of retransmissions of the poll message exceeds the maximum number of retransmissions; upon receiving the alarm message, transmitting an acknowledgement message to the device having transmitted the alarm message; and performing an operation associated with the emergency event.

In accordance with further another aspect of the present invention, there is provided a method for managing an emergency event in a coordinator. The method includes determining whether energy greater than or equal to a predetermined threshold is detected, in a sleep state; selecting a channel through channel scanning upon detecting the energy greater than or equal to the predetermined threshold; upon detecting an alarm message indicating occurrence of an emergency event, transmitting an acknowledgement message to a device having transmitted the alarm message; and handling the emergency event.

In accordance with yet another aspect of the present invention, there is provided a coordinator for managing an emergency event. The coordinator includes an energy detector for determining whether energy greater than or equal to a predetermined threshold is detected, and triggering a processor being in a sleep state upon detecting the energy greater than or equal to the predetermined threshold; and the processor for transitioning to an on-state if triggered by the energy detector, and upon receiving an alarm message indicating occurrence of an emergency event, transmitting an acknowledgement message to a device having transmitted the alarm message, and handling the emergency event.

In accordance with yet another aspect of the present invention, there is provided a coordinator for managing an emergency event. The coordinator includes a transmitter for transmitting, to a device, a poll message causing the device to transmit data to the coordinator; a controller for retransmitting the poll message upon failure to receive data for the poll message, determining whether the number of retransmissions of the poll message exceeds the predetermined maximum number of retransmissions, and transitioning to a sleep state for reception of an alarm message indicating occurrence of an emergency event, if the number of retransmissions of the poll message exceeds the maximum number of retransmissions; and a receiver for receiving the alarm message. Upon receiving the alarm message, the controller transmits an acknowledgement message to the device having transmitted the alarm message, by means of the transmitter; and performs an operation associated with the emergency event.

### Advantageous Effects

The present invention provides a method for accessing poll based ultra low power channel and simultaneously operating multiple BANs in medical implant communications

The present invention provides an integrated channel access mechanism that will work with disjoint physical layers that may be operating in disjoint frequency bands.

The present invention provides an effective polling based MAC that will reduce power requirements specifically for power constraint devices.

The present invention provides a method for handling emergency operations wherein the nodes or network nodes may be in a power saving mode such as sleeping.

The present invention provides a method to wakeup devices in sleep state for better management of power drainage.

The present invention provides a mechanism that will reduce the errors in the transmission by efficient error recovery mechanism.

The present invention provides a case where devices are admitted basing on the service level agreements to a body area network and further the network creation.

The present invention provides a mechanism for simultaneous operation of multiple networks.

### Brief Description of the Drawings

Figure 1 illustrates a schematic representation of a BAN star topology according to an embodiment of the present invention.
Figure 2 illustrates a high level architecture diagram of a WBAN device according to an embodiment of the present invention.
Figure 3 illustrates a generic superframe format according to an embodiment of the present invention.
Figure 4 illustrates a fixed length superframe format according to an embodiment of the present invention.
Figure 5 illustrates a variable length superframe format according to an embodiment of the present invention.
Figure 6 illustrates an exemplary format of an EoP message according to an embodiment of the present invention.
Figure 7 illustrates an exemplary format of a POLL message according to an embodiment of the present invention.
Figure 8 illustrates a schematic representation of a scheduled polling scheme with a poll period according to an embodiment of the present invention.
Figure 9 illustrates a schematic representation of a delayed polling scheme according to an embodiment of the present invention.
Figure 10 illustrates different polling schemes associated with different WBAN devices in the BAN star topology according to an embodiment of the present invention.
Figure 11 illustrates a schematic representation of a synchronization of sleep and wakeup schedule of the WBAN device with a coordinator according to an embodiment of the present invention.
Figure 12 is an exemplary data retransmission process illustrating poll and data collision according to an embodiment of the present invention.
Figure 13 is a flow of an operation of an error recovery mechanism for high data rate applications according to an embodiment of the present invention.
Figure 14 illustrates a schematic representation of a poll based error recovery process for single data transfer according to an embodiment of the present invention.
Figure 15 illustrates a schematic representation of a poll based error recovery process for block data transfer according to an embodiment of the present invention.
Figure 16 illustrates a schematic representation of the BAN star topology in an emergency scenario according to an embodiment of the present invention.
Figure 17 is a system level diagram illustrating a transmitter and a receiver when a coordinator is operational, according to an embodiment of the present invention.
Figure 18 is a system level diagram illustrating a transmitter and a receiver when a coordinator is non-operational, according to an embodiment of the present invention.
Figure 19 is a process flow chart showing device side operations for emergency handling when a coordinator is in an active state, according to an embodiment of the present invention.
Figure 20 is a process flow chart showing coordinator side operations for emergency detection when the coordinator is in a sleep state, according to an embodiment of the present invention.
Figure 21 is a process flow chart showing coordinator side operations for emergency detection when the coordinator is in a sleep state, according to another embodiment of the present invention.
Figure 22 is a process flow chart showing coordinator side operations in case of failure of maximum number of times when the coordinator is in an active state, according to an embodiment of the present invention.
Figure 23 illustrates an emergency handling process during sleep mode of the coordinator according to an embodiment of the present invention.
Figure 24 illustrates an emergency handling process during operational and idle mode of the coordinator according to an embodiment of the present invention.
Figure 25 illustrates an emergency handling process during an operational and busy mode of the coordinator according to an embodiment of the present invention.
Figure 26 illustrates a block diagram of an implant medical communication process according to an embodiment of the present invention.
Figure 27 illustrates a schematic representation of a BAN star topology for implant medical communication according to an embodiment of the present invention.
Figure 28 illustrates a state transition diagram of the WBAN device according to an embodiment of the present invention.
Figure 29 illustrates a duty cycling scheme of an implant device at different channels according to an embodiment of the present invention.
Figure 30 illustrates an exemplary single wakeup procedure according to an embodiment of the present invention.
Figure 31 illustrates a schematic representation of a data communication session showing an interference avoidance such that the implant device is not woken up during the data communication session, according to an embodiment of the present invention.
Figure 32 illustrates a lockup and wakeup phase in multiple device wakeup procedure according to an embodiment of the present invention.
Figure 33 illustrates an exemplary multiple wakeup procedure according to an embodiment of the present invention.
Figure 34 illustrates a schematic representation of a wakeup message frame format payload according to an embodiment of the present invention.
Figure 35 illustrates a schematic representation of a lockup message frame payload according to an embodiment of the present invention.
Figure 36 is an exemplary illustration of a network with a single MAC layer and two physical layers according to an embodiment of the present invention.
Figure 37 is an exemplary representation of a single MAC frame structure with polling cycle according to an embodiment of the present invention.
Figure 38 illustrates a differential poll rate channel access according to an embodiment of the present invention.
Figure 39 is an exemplary representation of polling frame structure for on-body communication according to an embodiment of the present invention.
Figure 40 illustrates a single poll rate channel access according to an embodiment of the present invention.
Figure 41 illustrates a MAC protocol with multiple instances according to an embodiment of the present invention.
Figure 42 illustrates a MAC protocol with a single instance according to an embodiment of the present invention.
Figure 43 illustrates a single MAC architecture for implant and on-body dual PHY according to an embodiment of the present invention.
Figure 44 is a flow chart showing coexistence of multiple implant networks according to an embodiment of the present invention.
Figure 45 is a schematic representation showing exemplary power saving options according to an embodiment of the present invention.
Figure 46 is a process flow diagram of an exemplary method for a microscopic power saving according to an embodiment of the present invention.

### Best Mode

It should be observed the method steps and system components have been represented by conventional symbols in the figures, showing only specific details are relevant for an understanding of the present disclosure. Further, details may be readily apparent to person ordinarily skilled in the art may not have been disclosed. In the present disclosure, relational terms such as first and second, and the like, may be used to distinguish one entity from another entity, without necessarily implying any actual relationship or order between such entities.

The present invention provides a method for handling a channel access mechanism scheme where different schemes of traffic exist such as low data rate constant bit rate applications, high data rate constant bit rate applications and variable data rate high bit rate applications. The channel access scheme helps in enabling a wireless channel sharing for body area network applications such as medical applications and non-medical application at the same time. The requirements for each of these varied applications are quite different and hence a single channel access mechanism is not easily designable whereas the disclosed idea provides an integrating approach for such channel access scheme.

Apart from the above case, some of the medical applications have high reliability requirement, hence, the channel access mechanism shall also help in an error recovery of the wireless data transfer should any error emerge due to data receiving loss etc.

The other identified requirement for such a device category is also to support emergency medical scenarios for medical applications. There is also a case of incorporation of an efficient and faster wakeup schemes that will enable faster responses for reducing the power consumption as well as reducing the response timings too.

The present disclosure considers a low power design for channel access mechanism for a wireless personal area network. In the medium access control, the following designs are uniquely presented.

First, an integrated medium access control mechanism that will handle different set of disjoint traffic scenarios is presented. Second, a low power based operation of the medium access control mechanism reducing battery usage in an efficient manner is presented. Third, an identified emergency data transmission mechanism for faster transfer of the emergency data from a device to a supervisor or a coordinator device is presented. Fourth, faster re-operation of the device is presented when the device is undergoing a power saving mode and is in a sleeping status. Fifth, a co-existence mechanism where multiple piconets are operational and collaboratively share the available physical channels is presented.

In an embodiment of the present invention, resources such as bandwidth are not reserved for emergency service, receiver radio frequency for emergency data transfer is not known to the device, and the resource is not reserved for emergency message transfer. Also, in an embodiment of the present invention, a wakeup mechanism is proposed, and a mechanism for achieving fixed polling time is proposed.

The present disclosure is specifically designed by keeping in mind the specific requirements of a compact and power efficient medium access control for Body Area Networking (BAN) applications.

Prior to the description of the present disclosure, BAN used in the present disclosure will be described in brief.

BAN is relatively a new concept that's getting standardized. There has been work underway for creating a BAN standards within Bluetooth SIG, Zigbee Alliance, but these standards are well set and has been incorporated into quite a large number of devices. The existing standards such as Bluetooth SIG and Zigbee Alliance are looking at aspects related to a single model of using BAN nodes which are wearable on the body. Currently, IEEE working group 802.15 has called for a new mechanism that will enable Body Area Networking standardization. The new standardization focus is to develop physical layer (PHY) and medium access control layer that will aptly work for channel conditions that are specific to human body.

So, the disclosed idea for MAC is specifically designed considering the aspects such as power consumption, faster emergency operation, power efficient wakeup mechanism, error recovery mechanism apart from being independent of any specific physical layer design and also the uniqueness of the idea lies in the aspect of solving a method of integrating the channel access mechanism where the physical layer may be disjoint.

Reducing the power consumption at MAC layer is also a design criterion considering the form factor and also the battery backup available in the devices. BAN application range from medical, non-medical and entertainment applications and the design considers a common way of addressing these applications in an integrated way. There are also cases when an emergency data need to be handled considering life critical aspects of body networking applications, and handling of such emergency data are also provided in the disclosure.

Wireless channels are prone to errors and are unreliable. Better ways of handling or reducing errors are important especially in BAN considering it involves medical scenarios. Handling and reducing errors is also uniquely designed and brought out in the present disclosure.

Polling based MAC has been proposed in other standards such as 802.11 PCF mode and 802.16. However, a primary requirement of the forthcoming 802.15.6 standard is to conserve power and achieve the delay and reliability requirements. The design paradigm for power-constrained network is different. The primary design objective is to reduce power consumption and simultaneously meet the quality of service (QoS) requirements of different traffics. A power optimized polling mechanism is proposed in the present disclosure for power constrained networks such as 802.15 TG6. The proposed methods in the present disclosure differ from the existing art in the following ways:
First, they are different in a single MAC architecture wherein multiple transceivers time-share a channel access mechanism and the channel access mechanism being the polling mechanism. Second, Unlike 802.11 and 802.16 standard devices, 802.15 TG6 -BAN device generates traffic specific to one particular application. Application-specific devices in 802.15 TG6 can sleep immediately after completing a data transfer operation and become active before the next data transfer time. Such feature allows 802.15 TG6 devices to conserve power and meet the QoS requirements at the same time. Third, in the existing Automatic repeat request (ARQ) or Error Recovery Mechanisms, the device may immediately retransmit the data with a poll message after losing the data without a need to perform a resource securing and notifying process with a specific delay time as in the prior art, to retransmit the lost data.

A new receiver-driven ARQ mechanism needs to be evolved for networks with following constraints: a constraint that contention is not preferred due to power consumption and asymmetric channel sensing, and a constraint that device cannot initiate data transmission due to Federal Communications Commission (FCC) rules and regulation on specific band usage such as MICS.

Fourth, the present disclosure handles the specific QoS requirements of emergency data when receiver is in sleep mode and duty cycling in a channel unknown to the sender, and when receiver is in an active mode and sender has no information on the operational channel of receiver.

Fifth, the existing solutions may not solve the problem of multiple wakeup in implant communication system. The existing wakeup mechanism for single implant device can be repeated multiple times to wakeup multiple implant devices. However, it may lead to intolerable wakeup latency for implant devices and high signal overhead. A method is proposed to wakeup multiple implant devices for a system comprising of multiple implant devices and an external coordinator, in a manner to reduce the worst case wakeup latency. The in-band wakeup solution also has the added advantage of single-radio and low cost.

Sixth, co-existence mechanism is proposed for simultaneous operation of multiple piconets. In the co-existence mechanism, piconets are secondary users, Listen Before Talk (LBT) or Adaptive Frequency Agility (AFA) + LBT is required to own the channel, end devices cannot initiate communication, transmit power is limited, and channel sensing is asymmetric.

Seventh, a power efficient polling mechanism is proposed to meet the diverse set of QoS requirements of different class of traffic, where one class of devices has following constraints. LBT or AFA + LBT is required to own the channel, end devices cannot initiate communication, transmit power is limited, and channel sensing is asymmetric. Another class of device has following properties: a low and constant arrival rate. Another class of device has following properties: a high and constant arrival rate and a high and variable arrival rate.

The present invention provides an integrated medium access control for handling different sets of disjoint traffic scenarios. Further, the present invention provides a method and system for optimizing power consumption during poll based operation of the medium access control mechanism. In addition, the present invention provides a poll based error recovery mechanism to achieve the desired application reliability in a power efficient and cost effective manner.

The present invention provides an in-band wakeup method for medical implant devices in a body area network. In addition, the present invention provides a method for handling medical emergency and medical events for implant devices on priority in a body area network. Besides, the present invention provides a method for accessing poll based ultra low power channel and simultaneously operating multiple BANs in medical implant communications.

### Method 1

The present invention provides a method to deal with a channel access mechanism scheme where different types of traffic exist such as low data rate constant bit rate applications, high data rate constant bit rate applications and variable data rate high bit rate applications. This channel access mechanism helps in enabling a wireless channel sharing for body area networking applications such as medical and non-medical, at the same time. The requirements for each of these varied applications are quite different and hence a single channel access mechanism is not easy to design.

To meet the application requirements, an IEEE 802.15 TG6 - Body Area Network (BAN) may operate in star topologies or extended star topologies. The invention is based on the star topology; however the proposed solution has a scope to expand it to extended star topology in future.

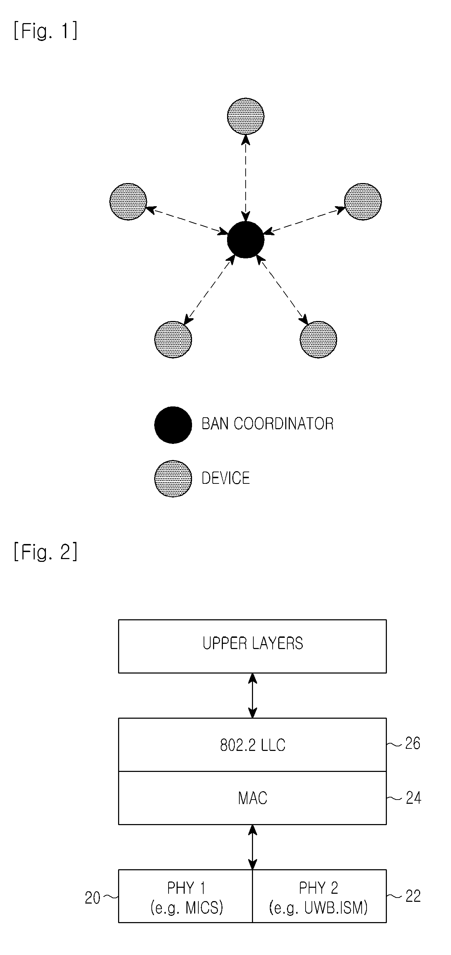

As shown in Figure 1, in the star topology of the present invention, the communication session is established between an end device and a BAN coordinator. The BAN is considered as a use case to support the embodiments of the present disclosure. The focus of BAN can be broadly categorized into two types, i.e. implant communication and on-body communication. Implant communication will support the service of medical applications and on-body communication will support the service of both medical and non-medical applications.

For on-body communication, both coordinator and device can initiate or terminate the communication. Additionally, coordinator can route data from one device to another device. The BAN traffic is primarily dominated by upstream traffic where a device (sensor attaché to the body) generates and sends data to the coordinator. However, the coordinator may send any application specific data to device as and when required.

In the present invention, it is assumed that as in Figure 1, topology is configured in star or extended star for relatively simple and reliable standards. The communication session is established between an end device and a BAN coordinator.

Based on Figure 1, the present invention proposes an operation scheme for personal communication services, called Body Area Network (BAN) for medical or entertainment services. In addition, the present invention proposes a poll based resource access method for power consumption optimization. Further, the present invention proposes a power and cost efficient poll based error correction method. Besides, considering the resource access method, the present invention provides an in-band wakeup method, a method for handling emergency signals, and a method for operating multiple BAN piconets at the same time, for on-body implant medical equipments.

Figure 2 illustrates the architecture for WBAN device. An IEEE 802.15 TG6 device may contain PHY1 20 or PHY2 22 or both PHY1 20 and PHY2 22, which contains transceiver for signal transmission and reception. The PHY1 transceiver operates in a frequency band suitable for implant communication and PHY2 transceiver operates in a frequency band suitable for on-body communication. An IEEE 802.15 TG6 device also contains a MAC layer 24 and an LLC layer 26 to access a channel of a selected frequency band for all kind of data transfer.

BAN may support single or multiple PHYs. Possible PHYs may include MICS, ISM, UWB, etc. When multiple PHYs are used, they commonly use different bands, but they may need to operate in the same band upon requirements of applications.

It is desired to design a single MAC which needs to support transmission of data over implant communication band and on-body communication band, and satisfy the functional requirements of both implant communication and on-body communication. A single MAC architecture on a device with two different physical transceiver structures is depicted in Figure 2.

The network generates five different type of traffic with different set of QoS requirements as mentioned in the Table 1.

**Table 1**

| Class | Description | Performance Requirements | Application Example | Physical layer |
|---|---|---|---|---|
| T0 | CBR very low data rate traffic | - Very low power consumption - Reliability | - Pacemaker | PHY 1 |
| T1 | CBR low data rate traffic | - Low power consumption - Packet delay required by the application, like 125 ms for patient monitoring - Support of large number of devices | - ECG - Fitness applications | PHY 2 |
| T2 | CBR high data rate traffic | - Low power consumption - Packet delay | EMG | PHY 2 |
| T3 | VBR traffic | - Delay and jitter - Maximization of bandwidth utilization - Power efficiency is optional | - Real-time Multimedia Streaming | PHY 2 |
| T4 | Best effort traffic | - Bandwidth utilization | - Log-file transfer | PHY 2 |

MAC functional description is as follows. The proposed MAC for body area network is a mix of contention based and contention free channel access mechanisms to utilize the advantage of both at the same time. The time line is divided in multiple superframes where each superframe consist of portion for contention based and contention free access mechanisms. The invention is particularly related to poll based contention free channel access. The details of contention based access are provided for sake of completeness of the MAC protocol.

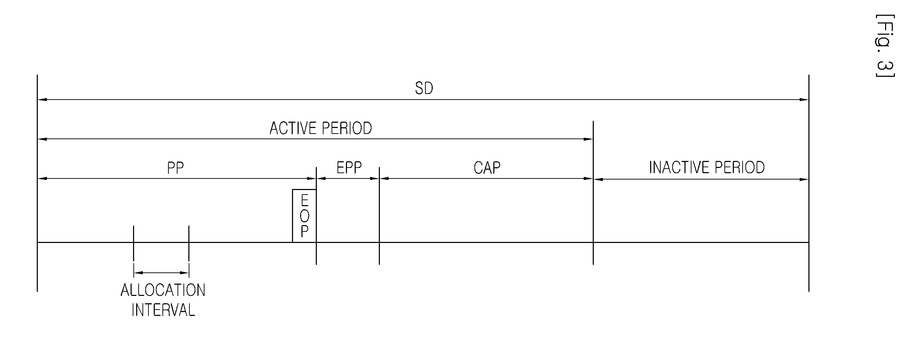

Superframe structure is illustrated in Figures 3 to 5. In a superframe, a time interval established by coordinator is divided into multiple parts to facilitate various channel access method to the network devices. The superframe duration (SD) is decided by the coordinator to meet the communication requirement of all connected devices to the network. The superframe is divided into four major parts as shown in Figure 3 depicting the structure of generic superframe containing all parts.

A poll based resource access and error correction method will be described below with reference to Figures 3 to 5.

Assuming that a contention based resource access method and a contention free resource access method are both in one superframe, the present invention mainly proposes the order of the two methods and a poll based method in a contention free period.

Referring to Figure 3, a Poll Period (PP) is used by the coordinator to provide poll based channel access to the network devices by polling each device as per polling mechanism and poling scheme employed for the device. This period is mainly used for transmission of data frames to and from the coordinator. The size of PP in a superframe depends upon the number of devices and allocated time interval (allocation interval) to each device. The size may or may not very across the superframes depending upon the employed polling mechanism. In other words, PP is a period for poll based resource access, and its length may be determined by the coordinator depending on the number of connected devices or the required data rate.

Extended Poll Period (EPP) is used to handle the additional data transmission and retransmission required by device/coordinator due to packet drops, variability in packet arrival rate and on demand traffic. In other words, the EPP is used for additional transmission if data supporting retransmission or irregular data occurs in the case where transmission error occurs in the PP.

Allocation intervals in EPP are not pre-scheduled and it is scheduled at run-time during the poll period of superframe to a device for additional data transmission and/or retransmission of frames. The actual length of EPP in a superframe is not fixed across superframes; it depends upon the dynamic requirement of devices and channel conditions. The size of EPP in a superframe can very from 0 to (SD - PP - minCAP - IP).

Contention Access Period (CAP) is used for transmission of data/control/management frames to and from the coordinator. The channel access mechanism implied in this portion is contention based in which devices first contend to acquire the channel for before data transmission. The CAP may be absent if not required. The length of CAP is dynamic across the superframes. When present, the duration of CAP (if present) may vary from minCAP to (SD - poll period - EPP - IP).

The CAP is the same as the generic contention period, and is used for transmission of control/management frames in addition to data transmission. In the present disclosure, the length of CAP is known from the coordinator to the end device by an End of Poll (EOP) message, and it may be reduced depending on changes in EPP, but may not be reduced below minCAP at least. Therefore, the length of CAP may vary from minCAP to [SD-PP-EPP-IP] in every superframe.

Inactive Period (IP) is an optional inactive portion that the superframe may have. During inactive portion, coordinator may either enter into a low power mode or use the inactive period to share the channel bandwidth with other coexisting networks.

Each of PP, EPP and CAP belongs to Active Period (AP), and they are periods in which the coordinator performs resource access operation. In contrast, IP is a period in which the coordinator is only in a reception state or transitions to a sleep state for low power consumption. This period may also be used for interference avoidance for coexistence between piconets.

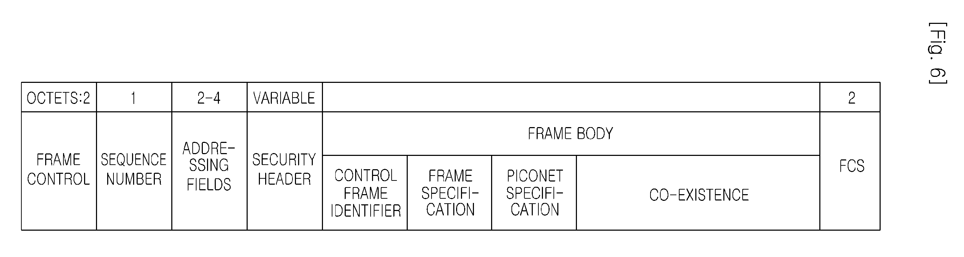

End of Poll (EoP) message is a special frame marker, and is as shown in Figure 6. EoP message is sent by the coordinator after completion of PP to advertise the duration of EPP, CAP and IP.

This EOP message is sent at the time when PP is completed. This message basically indicates the length of CAP and IP, and indicates even the length of EPP if needed. Positions of CAP, EPP and IP may be represented in 'frame specification'.

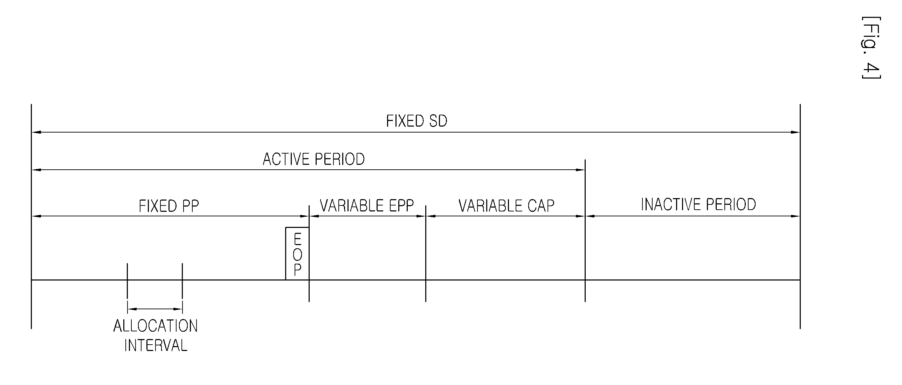

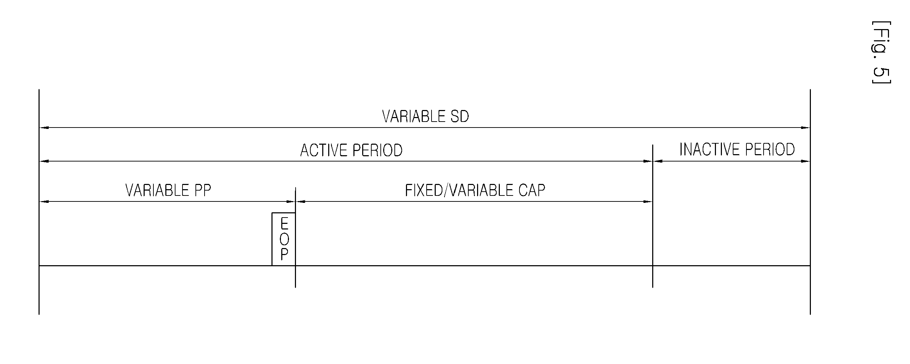

Fixed length, variable length superframe and no superframe structure concept will be described below with reference to Figures 4 and 5.

Upon access of an end device, the coordinator receives a required data rate and a traffic type of the end device, and operates superframes. The coordinator may change a PP and EPP operation method considering information about the end device. Figures 4 and 5 show the ways to deal with a power constraint device and a QoS requiring device with different operation methods, respectively.

As shown in Figures 4 and 5, superframe structures with fixed and variable superframe duration respectively. The size of superframe may be fixed or variable. The fixed superframe is useful for power constraint devices with deterministic or periodic packet generation. The fixed superframe in Figure 4 provides a deterministic sleep and wakeup schedule for the device.

In Figure 4, the end device using PP periodically performs wakeup/sleep and performs access in a poll allocation interval. Although every superframe is constant from the transmission time of EOP message till an end of CAP, since the end device having error or requiring additional transmission in PP should be handled during EPP after the EOP message, EPP and CAP may vary depending on the variability. In this operation method, since the allocation interval for a specific end device has periodicity, if the end device accurately wakes up for poll, the power reduction effect may be achieved.

On the other hand, the variable superframe in Figure 5 is useful to support data transfer from devices with non-deterministic and busty packet arrivals. Typically, non-medical applications have stringent QoS (Delay and Jitter) requirement. In case of variable superframe, the EPP is not required as the variability and retransmission is handled by varying the size of superframe. In Figure 5, since the end device having error in PP is immediately handled without waiting until after EOP message, the transmission time of EOP message may vary depending on the variability of PP, and thus the length SD of the entire superframe period may also vary. Therefore, in this operation method, retransmission due to error is immediately performed in each end device, making it possible to prevent transfer delay or jitter, and secure reliability.

It is also possible that only variable PP is present in a superframe without CAP and inactive period. In the operation of Figure 5, if EOP is not sent, CAP is also not used, and a no superframe structure operating only in PP is also available. Transmission/reception between the coordinator and the end device is entirely achieved by poll, and a control/management-related portion is indicated by CAP that the coordinator sometimes informs by sending EOP.

In this special case, there is no superframe structure as such defined by the coordinator. Figure 5 shows the variable PP with no superframe structure. The coordinator may decide not to transmit the EOP periodically and it may transmit an equivalent broadcast message occasionally to facilitate certain network operations.

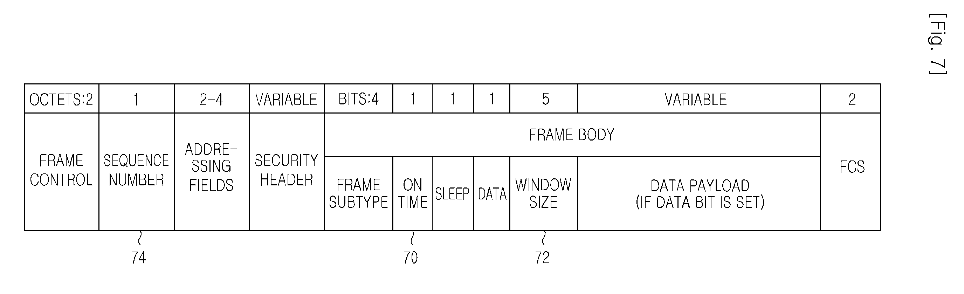

In the case of poll based channel access mechanism, to grant channel access to devices, the coordinator sends POLL message destined to a particular device. An exemplary format of POLL message according to an embodiment of the present invention is as shown in Figure 7. Referring to Figure 7, an 'on time' field 70 is a 1-bit field that is useful for device clock synchronization with the end device in the fixed superframe. A 'window size' field 72 is a field that represents the data capacity allowed for the end device in the number of data frames.

The device may transmit no data packet, single data packet or multiple data packets on reception of a single POLL message. The number of packets a device can send after receiving a POLL message is conveyed through the POLL message itself by the coordinator. If the device does not have any data to send, the device may transmit NULL_DATA back to the coordinator in response to a POLL message. Three types of poling mechanisms are used as per the requirement of the device application: Scheduled polling access, Delayed polling access and unscheduled polling access.

A polling mechanism of Scheduled Poll Access is as follows. This mechanism is particularly useful for highly power constraint device which also requires deterministic quality of service. Most of the medical applications in Body Area Network (BAN) fall into this category. The mechanism facilitates devices to sleep in a deterministic and scheduled manner to save the power and at the same time achieves higher throughput in case of high load conditions.

A device and coordinator shall employ scheduled poll access as described below.

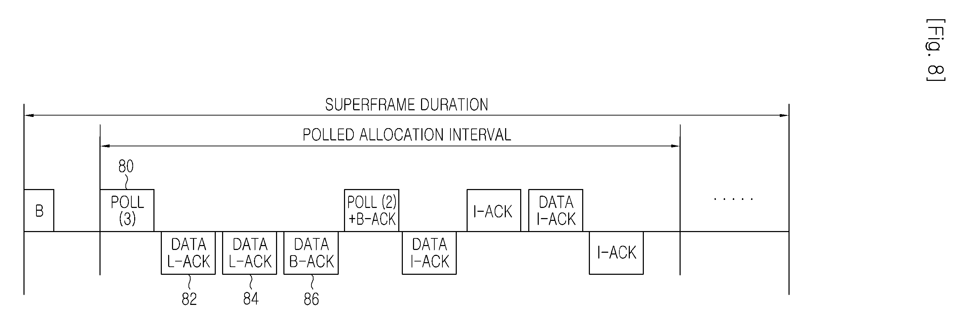

In the scheduled poll access, transmission/reception is possible only in the polled allocation interval as shown in Figure 8, and uplink, downlink and bi-link transmission is possible. The end device wakes up and undergoes synchronization at the start of the poll allocation interval that repeats every period.

Each device is allocated a time interval 'allocation interval' by the coordinator. The device and coordinator can only communicate with other each inside the allocation interval. An allocation interval can be further subdivided into slots and it can only have integer number of slots. A poll allocation interval can either be used as uplink, downlink or bi-link. A device may have one or more scheduled poll allocation intervals spanning the same allocation slots in every beacon period or every multiple beacon periods. The device shall wake up at the beginning of allocation interval to transmit frames to the coordinator or to receive frames from the coordinator. Scheduled poll access devices are not required to listen to the beacon frame for synchronization. The synchronization information is provided to the device through poll frame.

Referring to Figure 8, the coordinator shall send a Poll message 80 with 'on time' bit 70 set to the device at the beginning of an allocation interval of the device indicating the number of frames allowed for transmission by the polled device. The device need to wake up before its allocated interval in order to correctly receive the poll message. Upon receiving the Poll message successfully, the device can transmit maximum up to the specified number of data frames 82, 84 and 86 to the coordinator. Figure 8 illustrates a case where the number of allowed frames is 3, and the device transmits 3 data frames after receiving a poll message in which the number of data frames is 3. No frame transmission from or to the device shall commence beyond the allocated interval. When the frame transaction between coordinator and device is completed within the allocation interval, the coordinator may choose to send a poll message with a window size 72 having a value of 0 in Figure 7 to facilitate the device to go to the sleep mode immediately.

The coordinator shall retransmit the poll message with an offset value, after not receiving any frame from the polled device, where the offset value indicates the delay from the start of the allocated interval of the device. Upon receiving the poll frame, the device can select any ACK policy (No-Ack, Immediate-Ack, Late-Ack or Block-Ack) for acknowledgment of data frames. Further data transmission from device is possible after receiving a new Poll or Poll + Ack message in the same allocation interval or next allocation interval of the device. The coordinator shall commence the frame transaction with the next scheduled device after the completion of allocation interval of the current device.

During its scheduled poll access allocation interval, if the device has more data to transmit, the device may indicate coordinator through the 'more bit' of a data/control/management frame. The coordinator may immediately or later in Superframe send the poll message to grant allocation for extra frame transfer, with a time offset value in the poll message, where time offset represents time to the allocation interval grant for the extra frame transfer.

Upon receiving the poll message, the end device first starts uplink transmission by determining the possible number of transmission frames based on the 'window size' value. In the case where when transmission of one poll message is completed, allocation interval is not completed yet and the end device determines that a 'more data' bit is set in the data frame, the coordinator informs the possible number of additional transmission frames with the 'window size' field by sending an Ack message for the data frame together with the poll message.

If the end device has no more uplink data to transmit, the end device sends the last uplink data frame with 'more data' bit not set. Upon receiving this, if the coordinator has downlink traffic, the coordinator sends Ack message and successively transmit downlink data frames to the end device. The end device waits after sending an Ack message if the 'window size' is not '0', and transitions to the sleep state after sending an Ack message if the 'window size' is '0'.

In the case of starting scheduled poll allocations, to obtain one or more new scheduled poll allocations, a device shall send a Connection Request frame to the coordinator by specifying the Arrival Rate, Access Latency and Reliability Factor of the application.

To grant scheduled poll allocations in response to the connection request from one device, the coordinator shall respond with a Connection Assignment frame to the device, and the frame has different values in an interval start field and an interval end field so that allocation intervals for devices shall not overlap each other.

For connection requests from multiple devices, coordinator may grant scheduled poll allocation to multiple devices through a group assignment frame, in the frame with different values assigned to the Interval Start and Interval End fields of each device.

Using scheduled poll allocations will be described below. Upon successfully sending the Connection Assignment frame, the coordinator may start sending a poll to the device for the device to initiate one or more frame transactions, or the coordinator may start initiating frame transactions with the device, in the corresponding polled allocation intervals granted to the device. The device shall not initiate a frame transaction, until it receives a poll frame.

The recipient, the device or the coordinator, shall be ready to receive the frames transmitted by the sender and return appropriate frames during the allocation intervals. The device or the coordinator shall transmit the next frame pTIFS after the end of the current frame. The pTIFS time between two frames is the time required by a device to process the frame and some additional turnaround time. The device and the coordinator shall ensure that the frame transactions (including acknowledgment frames if required) stay within their scheduled allocation intervals, taking the appropriate turnaround time into consideration.

In the case of modifying scheduled poll allocations, a device may modify existing scheduled poll allocations by sending another Connection Request frame specifying the new requirements. The coordinator shall treat this request as a new request, except that it shall set the Change Indication field in its responding Connection Assignment frame with reference to the last Connection Assignment frame it sent to the device. In particular, if the coordinator rejects the modifications but maintains the existing allocations, it shall respond with a Connection Assignment frame with the Change Indication field set to 0 and the other fields are kept to the respective values contained in the last Connection Assignment frame sent to the device.

A coordinator may modify scheduled poll allocations of a device on its own by sending the device an unsolicited Connection Assignment frame specifying the new assignments to those allocations, and setting the Change Indication field in the frame with reference to the last Connection Assignment frame it sent to the same device.

A coordinator may modify scheduled poll allocations of multiple devices on its own by sending an unsolicited Group Connection Assignment frame specifying the new assignments to those allocations of devices, and setting the Change Indication field in the frame with reference to the last Group Connection Assignment frame it sent to the same set of devices.

In the case of aborting scheduled poll allocations, a device or a coordinator shall treat an existing scheduled poll allocation to have been aborted after failing to receive any frame in the last finite number of allocation intervals of the allocation. Subsequently, the coordinator may reclaim the aborted scheduled poll allocations.

A device and a coordinator may start a new scheduled poll allocation procedure as specified in section (starting scheduled poll allocation) to reinstate their lost scheduled poll allocations or obtain their replacements.

A device or a coordinator shall treat their connection to have been aborted after all the scheduled poll allocations of the device with the coordinator have been aborted.

In the case of ending scheduled poll allocations, a device may at any time end scheduled poll allocations by sending a modified Connection Request frame that contains Allocation Request fields with the Allocation ID fields identifying those allocations and with the Minimum Interval Length and Minimum Allocation Length fields set to 0.

A coordinator may, but should not where possible, at any time end any scheduled poll allocations of a device by sending the device a modified Connection Assignment frame that contains Allocation Assignment fields with the Allocation ID fields identifying those allocations and the Interval Start and Interval End fields set to 0.

A method for defining the nature of a particular message by setting the field value to 0 is not necessarily limited to one particular scheme.

A device or a coordinator may send a Disconnection frame to end their connection, i.e., to release the device's address id, wakeup arrangement, and scheduled poll allocations with the coordinator.

A polling mechanism of Delayed Poll Access is as follows. This mechanism is particularly useful for not highly power constraint devices that require very stringent quality of service. Some of the non medical applications in BAN like posture detection and gaming fall into this category. However, the medical devices which are not very power constraint and require high quality of service in terms of delay and reliability can use this mechanism. The mechanism facilitates devices to sleep in a less deterministic and scheduled manner and therefore consume little bit more power than scheduled access but since it is capable of rapidly handling retransmissions of the individual devices due to frame loss it can achieve better delay performance than scheduled access.

A device and a coordinator shall employ delayed poll access as described below.

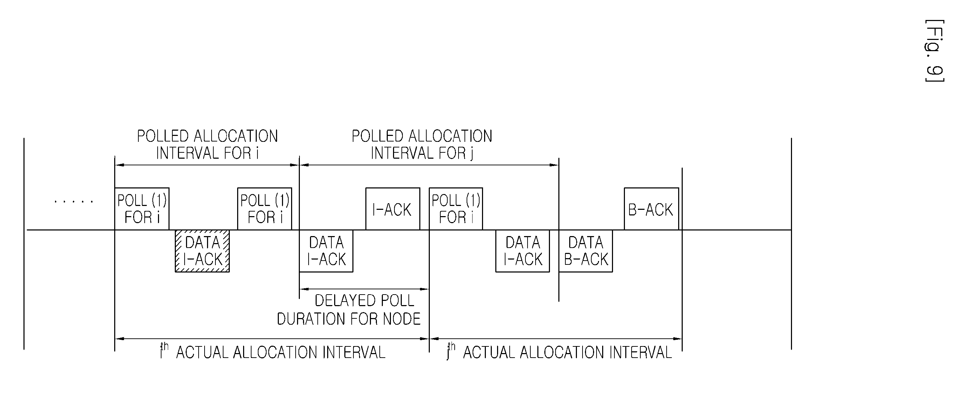

Figure 9 illustrates delayed poll access. This access method is suitable for an end device whose QoS requirements are higher than the end device having high power requirements. In other words, the access method is to obtain gain in terms of delay or reliability. In the case of scheduled poll access, if transmission error occurs, there is no opportunity in this superframe and the end device should wait until the next superframe. However, in the case of delayed poll access, when the coordinator sends the next poll message due to failure in transmission of data frames, the coordinator informs its possibility of transmission by continuously sending a poll message to the end device regardless of the first set allocation interval. In other words, the coordinator sends the poll message with a window size set greater than or equal to 1.

Figure 9 shows a scenario where as its retransmission is immediately performed, an i-th end device succeeds in retransmission using the original allocation interval of a j-th end device, and successively sends a poll message to the j-th end device having waited, thereby continuing the transfer process.

If the i-th end device has already suffered from a delay, the j-th end device should wait in a reception state even though a poll message is not received in a wakeup state. The j-th end device waits by a maximum of a period D from the start of its allocation interval. As the coordinator also knows this period, it sends a poll for the just next end device without sending an additional poll if the period D is over. The period D is determined in a connection request/assignment frame process.

Delayed poll access interval should appear after the scheduled poll access interval in a Superframe. A device may have one or more delayed poll allocation intervals spanning the same allocation slots in every beacon period or every multiple beacon periods. The device shall wake up at the beginning of allocation interval to transmit data frames. Delayed poll access devices are not required to listen to the beacon frame for synchronization similar to scheduled devices.

Unlike in the scheduled poll access, the frame transmission from or to the device can commence beyond the allocated interval of the device. For uplink data transmission, coordinator may send a poll frame to a device within D duration after the beginning of an allocation interval of the device, indicating the number of frames allowed for transmission by the polled device. The device shall wake up at the beginning of the allocated interval to receive the poll message from hub. Upon receiving the poll frame successfully, device can transmit maximum up to the specified number of data frames to the hub.

Coordinator shall not poll a device beyond the D duration after the start of allocation interval of the device. The Device can go to sleep mode if no poll message is received within D interval from the beginning of allocation interval. The coordinator schedules the delayed access device consecutively, and the delayed poll access interval in Superframe may vary from one beacon period to another beacon period.

In a superframe, delayed access interval is followed by EoP message and a contention access period, where the appearance of an EoP message in a superframe depends on the actual delay access interval occurred in that superframe. The length of contention access period in a Superframe immediately after the delayed access interval depends upon the duration of the actual delayed poll access interval occurred in that superframe, with constraint that length of contention access period always equal or greater than minCAP.

In the case of starting delayed poll allocations, to obtain one or more new delayed poll allocations, a device shall send a Connection Request frame to the coordinator when permitted to do so polled allocations by specifying the Arrival Rate, Access Latency and Reliability Factor requirements. To grant delayed polled allocations, the coordinator shall respond with a Connection Assignment frame to the device.

For connection requests from multiple devices, coordinator may grant delayed poll allocation to multiple devices through a group assignment frame, in the frame with different values assigned to the Interval Start and Interval End fields of each device so that allocation intervals for individual devices may not overlap each other.

In the case of using delayed poll allocations, upon successfully sending the Connection Assignment frame, the coordinator may start, as in Figure 9, sending a poll message to the device for the device to initiate one or more frame transactions or the coordinator may start initiating frame transactions with the device, in the corresponding polled allocation intervals granted to the device. The device shall not initiate a frame transaction, until it receives a poll frame.

The recipient, the device or the hub, shall be ready to receive the frames transmitted by the sender and return appropriate frames during the allocation intervals.

In the case of modifying delayed poll allocations, a device may modify existing delayed poll allocations by sending another Connection Request frame specifying the new requirements. The coordinator shall treat this request as a new request, except that it shall set the Change Indication field in its responding Connection Assignment frame with reference to the last Connection Assignment frame it sent to the device. In particular, if the coordinator rejects the modifications but maintains the existing allocations, it shall respond with a Connection Assignment frame with the Change Indication field set to 0 and the other fields are kept to the respective values contained in the last Connection Assignment frame sent to the device.

A coordinator may modify delayed poll allocations of a device on its own by sending the device an unsolicited Connection Assignment frame specifying the new assignments to those allocations, and setting the Change Indication field in the frame with reference to the last Connection Assignment frame it sent to the same device.

A coordinator may modify delayed poll allocations of multiple devices on its own by sending an unsolicited Group Connection Assignment frame specifying the new assignments to those allocations of devices, and setting the Change Indication field in the frame with reference to the last Group Connection Assignment frame it sent to the same set of devices.

In the case of aborting delayed poll allocations, a device or a coordinator shall treat an existing delayed poll allocation to have been aborted after failing to receive any frame in the last mDelayedPollAllocationAborted allocation intervals of the allocation. Subsequently, the coordinator may reclaim the aborted delayed poll allocations.

A device and a coordinator may start a new delayed poll allocation procedure as specified in section (Starting delayed poll allocations) to reinstate their lost allocations or obtain their replacements. A device or a coordinator shall treat their connection to have been aborted after all the delayed poll allocations of the device with the coordinator have been aborted.

In the case of ending delayed poll allocations, a device may at any time end delayed poll allocations by sending a modified Connection Request frame that contains Allocation Request fields with the Allocation ID fields identifying those allocations and with the Minimum Interval Length and Minimum Allocation Length fields set to 0.

A coordinator may, but should not where possible, at any time end any delayed poll allocations of a device by sending the device a modified Connection Assignment frame that contains Allocation Assignment fields with the Allocation ID fields identifying those allocations and the Interval Start and Interval End fields set to 0.

A device or a coordinator may send a Disconnection frame to end their connection, i.e., to void the device's address id, wakeup arrangement, and delayed poll allocations with the hub.

In the case of Unscheduled Poll Access, a device and a coordinator shall employ unscheduled poll access as described below.

For unscheduled poll access, the coordinator does not assign an allocation interval in advance. The coordinator may request transmission by designating the number of data frames to be allocated, based on a 'window size' value, or may request to transmit all frames it has in the end device's buffer using the largest value among the 'window size' values. It is assumed that the end device is always in an active state in the unscheduled poll access.

Coordinator does not assign any pre-allocated intervals to the unscheduled poll access devices. Coordinator shall send a poll frame to the device, with a value of a window size 72 in the poll frame, where the window size 72 allows device to transmit single or multiple data frames up to the value of the window size 72. A specific value, for example, 0xFF, among window size values allows the device to transmit frames stored in the buffer or till the buffer is empty.

The device need to stay in active state to receive the poll message destined to the device. Coordinator decides the device order for polling with unscheduled poll access. The coordinator shall commence the frame transaction with the next device in the order list after the completion of transaction with the current device. A device shall send a Connection Request frame to the coordinator for unscheduled polled access by specifying the Arrival Rate, Access Latency and Reliability Factor. To grant connection, the coordinator shall respond with a Connection Assignment frame to the device.

Upon successfully sending the Connection Assignment frame, the coordinator may start sending a poll to the device for the device to initiate one or more frame transactions or coordinator may start initiating frame transactions with the device. The device shall not initiate a frame transaction, until it receives a poll frame. The recipient, the device or the hub, shall be ready to receive the frames transmitted by the sender and return appropriate frames during the unscheduled poll access. The device or the coordinator shall transmit the next frame pTIFS after the end of the current frame. A coordinator shall treat the connection to be aborted after failing to receive any frame in the last finite number of poll cycles. A device or a coordinator may send a Disconnection frame to end their connection.

Polling Schemes will be described below. Various polling schemes or MAC scheduling will be described below in detail. The coordinator completes data transaction activity with every device one by one in a cyclic manner, defined as poll cycle. A session is defined between the coordinator and device for the duration the coordinator sends first POLL message to the device and switches to next device. In a session, a coordinator can send single or multiple POLL messages to collect data from the device and move to the next device. Based on different conditions, coordinator can move to the next device. The different conditions include, when device has no more data to transmit, or when the allocated interval is over, or when the device has already transmitted its maximum allowed data frames as specified by the Polling scheme, or when maximum poll retry is exhausted, or when emergency event has occurred in another device.

In case of superframe structure, the devices can opt to be polled in every i-th (i > 0) superframe and coordinator need not have to POLL the device in every superframe.

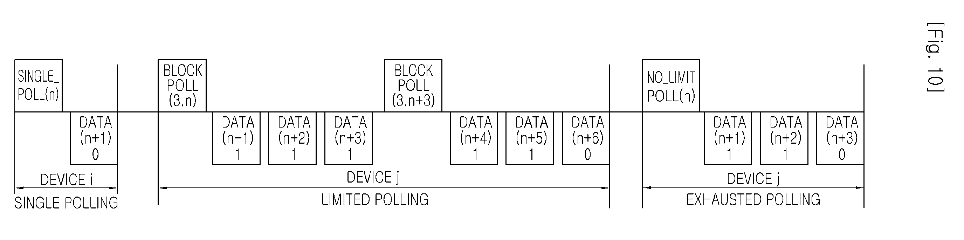

The coordinator can collect required data packets from device either by sending single POLL message or multiple POLL messages. The number of packets a device can transmit upon receipt of a POLL message is communicated through POLL message itself. How many packets a device can transmit in a session is defined by polling scheme employed for the device. Following are the supported polling schemes. Figure 10 shows poll based data transfer with different schemed, and shows operations of single polling, limited polling, and exhausted polling in polling the end device by the coordinator.

In the case of the single data polling in Figure 10, one poll is transmitted to an end device at poll period, and the end device sends one data frame in response thereto. The data frame has therein a value to help recognize the frame packet order such as pktSeqnumber. This value may be used to determine whether the frame packet is a retransmitted packet or a newly transmitted packet.

In this polling scheme, the coordinator needs to collect single data in a session with the device. To collect the data from the device, the coordinator sends a POLL message to the device. The device can transmit only a single data frame on receipt of this message. The pktSeqnumber 74 in the POLL message in Figure 7 indicates that all previous data frames including frame with this sequence number has been received successfully at the coordinator. The transmitted data frame could be retransmission of previously transmitted packet or new packet transmission depends upon pktSeqNumber 74 specified in the POLL message. The error recovery mechanism associated with the poll based channel access is detailed in a later section. This polling scheme is particularly suitable for devices with deterministic packet generation and has low latency requirement. Since only single data need to be collected, this polling scheme is mainly suitable for scheduled and delayed polled access methods with fixed superframe structures.

In the case of limited data polling in Figure 10, when receiving a POLL and sending data frames, it is possible to send only up to the possible number of data frames the coordinator has decided.

In this polling scheme, the coordinator needs to collect multiple but limited data in session with the device. To collect the data from the device, the coordinator sends a POLL message to the device. The device can transmit data frames up to the number of packets stored in the buffer upon reception of this message, when it is less than the number of data frames granted by the coordinator. The pktSeqNumber 74 in the POLL message in Figure 7 indicates that all previous data frames including frame with this sequence number has been received successfully at the coordinator. The transmitted data frame could be retransmission of previously transmitted packet or new packet transmission depends upon pktSeqNumber 74 specified in the message. Since deterministic number of multiple data needs to be collected, this polling scheme is mainly suitable for scheduled and delayed polled access methods with fixed superframe structures.

In the case of the exhausted data polling in Figure 10, all frames in the end device's buffer may be sent out. The single polling and the limited polling are properly operated when being serviced for deterministic traffic with scheduled poll access or delayed poll access in the fixed superframe. The exhausted polling is properly operated when being serviced for variable traffic in a variable superframe structure or a no superframe structure. It is also properly used even when deterministic traffic and variable traffic coexist in the fixed superframe.

In this polling scheme, the coordinator can collect unlimited data in a session with a device. To collect the data from the device, the coordinator sends POLL message to the device. The device can transmit multiple data frames as specified in the 'window size' field of the POLL message. The pktSeqNumber 74 in the POLL message of Figure 7 indicates that all previous data frames including frame with this sequence number has been received successfully at the coordinator. The transmitted data frame could be retransmission of previously transmitted packet or new packet transmission depends upon pktSeqNumber 74 specified in the message. This polling scheme is particularly suitable for traffic with non deterministic and burst packet arrivals. Since the number of packets a device can transmit in a session is non deterministic, this polling scheme is mainly suitable for unscheduled access methods with variable or no superframe structures. The polling scheme is also applicable with fixed superframe structure when devices with deterministic and non-deterministic traffic characteristics exist together.

The random access mechanism shall run at the contention access period (CAP) of superframe structure defined by the coordinator. It will be primarily used for network management related protocol message exchange between device and coordinator and for non QoS applications. Since the carrier sensing is not reliable across all channel models and PHYs, any variant of collision resolution other than carrier sense can be adopted.

In the case of Channel Time Partitioning, the channel time unit is characterized by the symbol duration. The absolute value of symbol duration depends upon PHY. All the access mechanisms detailed above can be implemented using both slotted and un-slotted systems. In slotted system, the time is partitioned into equal number of slots (multiple of symbol durations) and every frame transmission should commence at the start of the slot boundary. On the other hand, in un-slotted system, the channel time is not marked and frame transmission is allowed at any channel time.

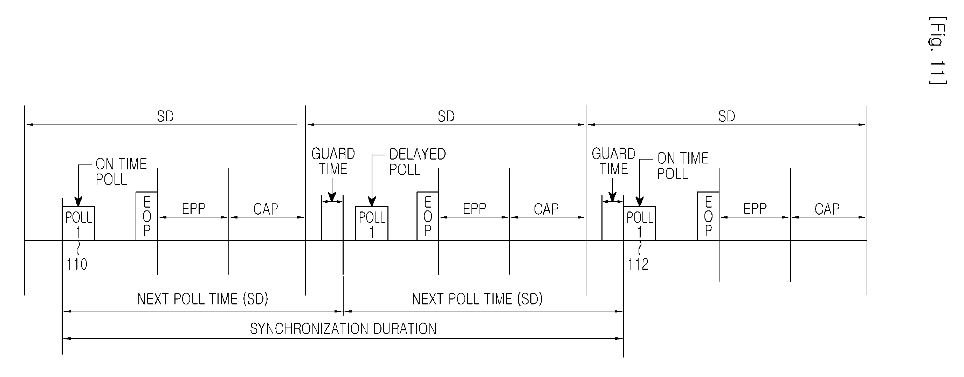

Device clock synchronization will be described below with reference to Figure 11.

The power constraint devices, especially medical devices try to sleep most of the time to save the power, when there is no data transaction going on with the coordinator. Such devices need to synchronize their sleep and wakeup schedule with coordinator in order to receive the POLL message sent by the coordinator. Since the device can only transmit data when polled in poll based access, no synchronization is required for data transmission. In addition, the devices which do not need to save the power have no synchronization requirement at all. The synchronization requirement is applicable to fixed superframe only. In case of variable superframe, the next poll time is not fixed and the devices have to be awake all the time. The polling rate for a device could be multiple of polling cycle established by the coordinator.

In the fixed superframe, an end device listens to a POLL message according to the polling cycle determined by the coordinator and performs data transmission/reception. The end device may continuously receive multiple POLL messages in sequence within one allocation interval when it wakes up once. An 'on time' bit is set in the first sent POLL message among the multiple POLL messages. Only in this case, synchronization information such as timestamp included in the received POLL message is used for synchronization correction, and when the other POLL messages with an 'on time' bit not set is received, they are not reflected. In the case of downlink traffic, the coordinator may send a NULL_POLL message before actual data with "on-time" bit set. For example, 'being set' means that a value of 'on time' bit is 1, and 'being not set' means that its value is 0.

An "on-time" bit 70 in the POLL message of Figure 7 is used to inform the devices of the start of allocation interval. Additionally, the POLL message may contain a timestamp value, if not transmitted on time. The device can calculate the next POLL time to synchronize with the coordinator to receive the next POLL message correctly. The devices will not use received POLL message for synchronization if "on-time" bit is not set. The device has to wake up before its next scheduled poll time to receive the next poll message. The duration before scheduled POLL time i.e. guard time a device need to wake up depends upon maximum clock skew that can occur at the device with respect to coordinator after reception of last POLL message with 'on time' bit set for synchronization. The duration between two on time POLL messages 110 and 112 is called synchronization duration. In case of downlink traffic, the coordinator can send a NULL_POLL message before actual data with "on-time" bit set, for device synchronization. Figure 11 explains the device synchronization in a poll based access with fixed superframe structure.

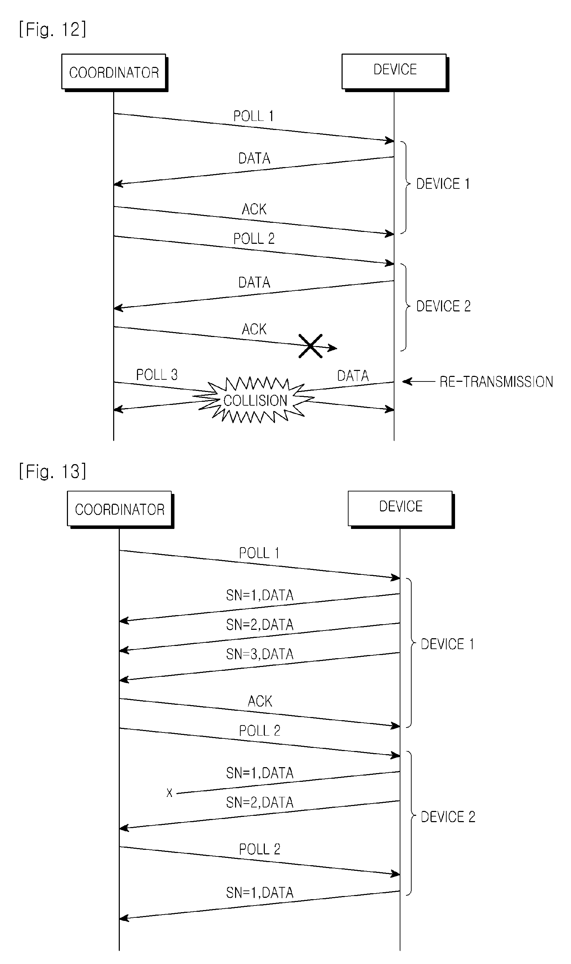

Error recovery will be described below with reference to Figure 12.

In order to provide reliable packet transmission, the standard supports two kind of error recovery mechanism: poll based error recovery (coordinator driven) applicable only to upstream traffic with poll based channel access and Automatic Repeat Request (sender driven) which is applicable to both upstream and down stream traffics. ARQ is a generic error correction method, and applicable to both uplink and downlink traffics. However, since the ARQ based error recovery is not power and bandwidth efficient because of additional transmission of acknowledge of packet, the poll based error recovery is provided for highly power constraint devices. The poll based error recovery method proposed by the present invention is applied only to the uplink traffic that is sent from the end device to the coordinator.

Additionally, as in Figure 12, ARQ mechanism requires retransmission of data packet once data packet or Acknowledgement (Ack) is lost. The poll based access does not allow retransmission of packet without any response received from the coordinator otherwise it can lead to the collision of retransmitted packet with poll message. The situation is shown in Figure 12, which is a flow diagram showing a need for an error recovery procedure suitable for poll access. If a device 2 attempts retransmission within an allocation interval when ACK for uplink data frame is not received, collision may occur with a POLL message for the next device 3.

Figure 12 is a flow diagram illustrating an operation of error recovery mechanism for low data rate application.

Most of low data rate applications include one packet to transmit, whereas high data rate applications may include multiple packets to transmit during polling. In the conventional error recovery mechanism, if Ack message is not received within a specified time, a device retransmits data. However, it may not be possible in the polling based channel access mechanism that can transmit data only after a device receives a POLL message as collision may occur between a POLL message and a data message.

As illustrated in Figures 12 and 13, if reception of all data packets is successful, the coordinator sends an Ack message.

If all data packets or POLL messages are lost, the coordinator retransmits the POLL message for avoidance of collision between data and POLL message.

If Ack message is lost, the coordinator enters the sleep mode after the next device receives a POLL message or after timeout.

Figure 13 is a flow diagram illustrating an operation of an error recovery mechanism for high data rate application. As illustrated in Figure 13, if some data is lost, some of the lost data may be received by retransmitting the POLL message back to the device.

The Ack message and the next POLL message may not be merged, and if a smaller number of packets and/or a number of smaller packets are transmitted, individual Ack messages contribute to a waste of power consumption.

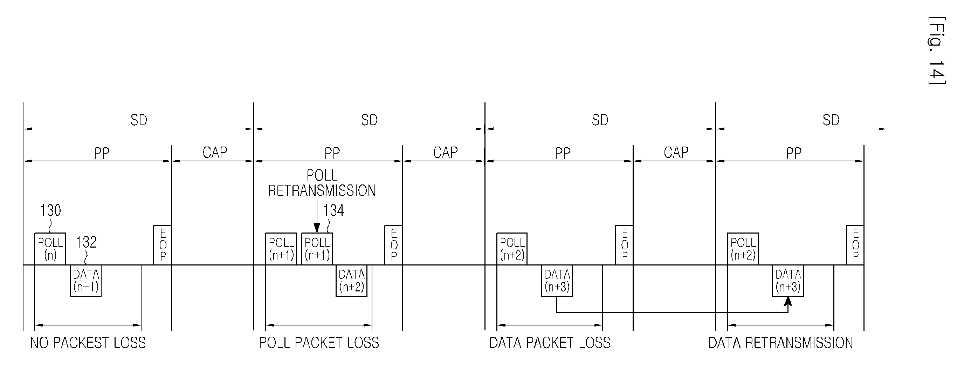

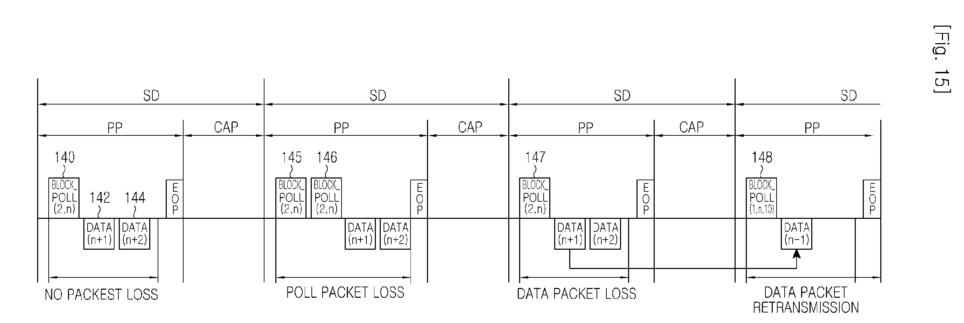

Poll based error recovery will be described below with reference to Figures 14 and 15.

The poll based error recovery mechanism is integrated part of poll based channel access mechanism and does not require separate acknowledgement to be sent by the coordinator in response to receipt of a packet from the device. This error recovery is coordinator driven and only applicable to upstream traffic. Following sections detail the poll based error recovery in case of single and block data transfer respectively. Following details the error recovery to handle different kind of packet losses in single data transfer. Figures 14 and 15 demonstrate the poll based error recovery for single and block data transmission.

In the present invention, for the uplink traffic using poll access, error recovery procedure is defined as follows. This method may obtain more power-efficient effects compared with the ARQ method, because additional transmission/reception of ACK messages is not required. The poll based error recovery procedure includes single poll error recovery, block poll error recovery, and bitmap poll error recovery. The single poll error recovery is as shown in Figure 14.

SINGLE_POLL message transmission, reception and retransmission will be described first with reference to Figure 14.

The coordinator sends SINGLE_POLL message 130 to the device with 'pktSeqNum' number 74 in Figure 7, asking the device to send packet with sequence number next to 'pktSeqNum' 74. On receipt of SINGLE_POLL message 130, the device transmits a single data 132 with sequence number next to the specified "pktSeqNumber" 74 specified in the SINGLE_POLL message 130. The device transmits a data frame corresponding to the next number of 'pktSeqNum'. Data up to 'pktSeqNum' having been stored in the buffer is discarded for retransmission.

The device can drop all the transmitted packets from its buffer up to sequence number specified in the SINGLE_POLL message 130. In case the coordinator does not detect any transmission from the polled device or the received data is corrupted, the coordinator will retransmit the SINGLE_POLL message 134 with the following exceptions.

In these exceptions, data transaction can be completed within the remaining allocated interval in case of scheduled access otherwise the SINGLE_POLL with same 'pktSeqNum' 74 will be sent in next poll cycle. Re-transmission of SINGLE_POLL messages 134 is not reached to that *maxPollreTransmission* value. The poll period is not extended inside the superframe so the only minCAP is left.

In other words, in the case where POLL message is retransmitted, in case of scheduled poll access, if retransmission is possible within a predetermined allocation interval, the POLL message retransmission is possible when the remaining possible poll period except for the expected retransmission period no longer reduces minCAP. Otherwise, retransmission is attempted by transmitting the current pktSeqNum in the next poll period. The retransmission is limited to the maximum retransmission value such as *maxPollreTransmission.*

BLOCK_POLL transmission, reception and retransmission will be described below with reference to Figure 15. The block poll error recovery method is similar to the single poll error recovery method except that the possible number of multiple data frames is indicated by a 'window size' value in a POLL message as in Figure 15.

The coordinator sends BLOCK_POLL message 140 to the device with 'pktSeqNum' number 74 and 'window size' 72 asking device to send multiple data packets specified by window size with starting sequence number next to the 'pktSeqNum' 74.

On receipt of BLOCK_POLL message 140, the device transmits numbers 142 and 144 of data as specified in window size field 74 of the message with sequence number next to the specified "pktSeqNum" 74.

The device can drop all the transmitted packets from its buffer up to sequence number specified in the BLOCK_POLL message 140.

In case the coordinator does not detect any transmission from the polled device after transmitting a BLOCK_POLL message 145, the coordinator will retransmit a BLOCK_POLL message 146 with same or reduced window size only if:
- Data transaction for multiple packets can be completed within the remaining allocated interval in case of scheduled access. Otherwise the BLOCK_POLL message 147 with same 'pktSeqNum' number will be sent to the device in next poll cycle;
- Re-transmission of POLL messages is not reached to that *maxPollreTransmission* value; and
- The poll period is not extended inside the superframe so the only minCAP is left.

BITMAP_POLL transmission and retransmission will now be described with reference to Figure 15. This block poll error recovery method is a method in which if partial errors occur in multiple data frames when BLOCK POLL message is sent, information about the partial errors is carried by POLL message in the bitmap form.

The coordinator will send BITMAP_POLL message 148 to the device only if it receives partial number of packets from the device in response to the BLOCK_POLL message and the last packet received from the device is not received with 'more bit' reset. The BITMAP_POLL message specifies 'pktSeqNum' 74, 'window_ size' 72 and bitmap of packets to be retransmitted.

In case the coordinator does not detect any transmission from the polled device, the coordinator will retransmit the BITMAP_POLL message with same or reduced window size only if:
- Data transaction for multiple packets can be completed within the remaining allocated interval in case of scheduled access. Otherwise the BITMAP_POLL message with same 'pktSeqNum' number will be sent to the device in next poll cycle.
- Re-transmission of POLL messages is not reached to that *maxPollreTransmission* value; and
- The poll period is not extended inside the superframe so the only minCAP is left. Automatic Repeat Request (ARQ) based error recovery will also be described.

The ARQ based error recovery is applicable to both upstream and downstream traffic. Stop and wait ARQ mechanism shall be used for single data transfer with immediate acknowledgement and selective repeat ARQ shall be used for block data transfer with delayed acknowledgement specifying the bitmap of successful transmission.

### Method 2

The Medium Access Control (MAC) layer is responsible for providing a channel access mechanism among the devices which can communicate with each other using a shared communication medium without any collision. Different type of data traffics (Audio, Video, File Transfer etc.) demands different type of QoS from their underlying channel access mechanism. The wireless communication has opened up a new era in telemedicine systems where patient's medical information captured by various medical sensors can be sent through wireless medium. This avoids lot of bulky wires, increases patient's movements and facilitates patient's remote monitoring. The task of providing reliable medical communication becomes more difficult in case of wireless medium because wireless communication systems are more susceptible to the error than the wired medium.

Emergency handling is one of the most crucial requirements in any telemedicine systems. Most of the previous research work considers emergency data traffic similar to traditional QoS applications. However, emergency messages have highly erratic nature with compared to periodic traditional QoS applications such as voice streaming and multimedia traffic. First of all, emergency events are extremely rare and may occur once in several months/years. Therefore, pre-reserving resources for emergency traffic can result wastage of network resources. Secondly, although emergencies occur rarely, this kind of data is extremely delay-intolerant. It has to be sent as soon as possible. Hence, emergency data should not be delayed or denied due to dynamic availability of network resources. Thirdly, when emergency occurs, the network (coordinator) may not be operational.

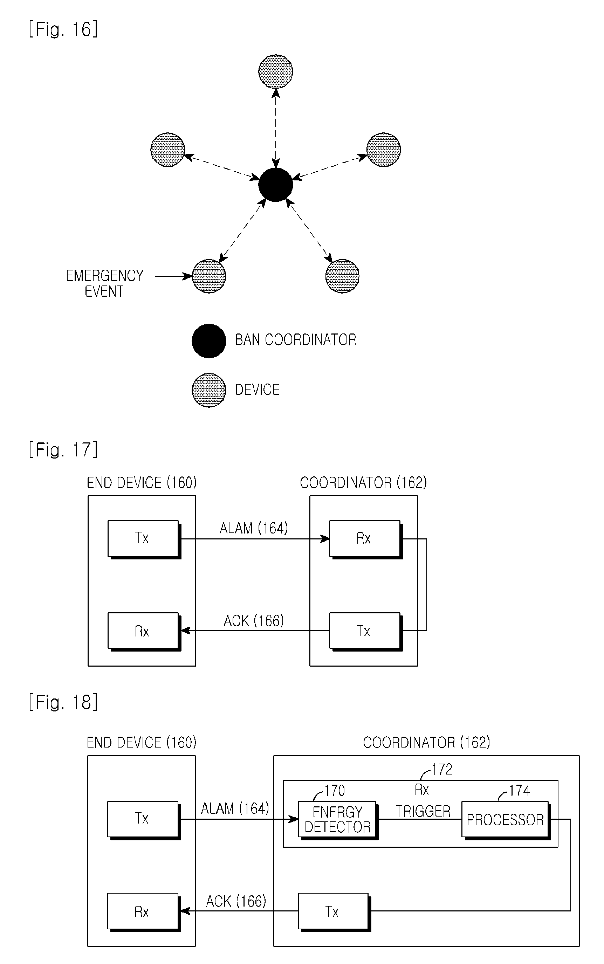

The proposed mechanism considers a star topology network with end devices (medical sensor nodes) and a single coordinator responsible for collection of sensory data from the devices. Figure 16 shows an exemplary diagram of start topology and occurrence of emergency event at the medical sensor node. The node can detect emergency any time (e.g. abnormality in heart bit rate, higher glucose level) irrespective of whether coordinator is operational (busy with the collection of scheduled periodic medical data) or not. The emergency data has to be delivered to the coordinator timely and reliably.

Following problems are addressed by the proposed method.

The emergency event may occur in a week, month or year, and in this case, no synchronization between the device (sensor node) and the coordinator (data collector) can be assumed.

The coordinator may not be operational when the emergency event occurs at the device. Furthermore, the other coexisting networks could be operational and their data/control messages may interfere with the emergency traffic.

Since multiple networks have to co-exist with each other, a channel cannot be fixed for the emergency traffic. The fixed channel may be having interference while emergency occurs.

The emergency events are extremely rare and may occur just once in several months/years. Therefore, pre-reserving resources can result in significant wastage of resources and it may degrade the performance of regular medical traffic when there is no emergency.

Emergency traffic cannot be denied due to limited resources or in case most of the resources are being used.

The emergency data needs to be communicated within the latency bound of the emergency application requirement.

A description will now be made of a method for handling emergency messages in end devices, especially implant-type end devices in the BAN system as in Figure 16. Emergency messages are types of traffics that occur very rarely. Therefore, pre-allocating resources for emergency messages may cause a significant waste of resources. However, if emergency messages are transmitted with no resources allocated in advance, delay may occur inevitably.

Following problems are solved by the proposed method.

The proposed invention does not reserve any resource (time slot or frequency channel) for emergency traffic. The emergency alarm can be received/detected even when the coordinator is not operational or other coexisting networks are operational. The reliable and fast delivery of emergency data is needed, even when most of the bandwidth is already being used by the rest of the nodes. The reliable detection of emergency event is required even in case multiple networks coexist.

In accordance with the proposed method for handling emergency events, resources are secured in advance, but resources for other end devices transmitting general data are used, preventing a waste of resources, and even while the coordinator handles the general end devices, the emergency events may be handled without delay. Of course, the emergency events may be handled when the coordinator is merely in the reception state. If an emergency service is needed in a case where the coordinator needs to transition to the sleep state, a wakeup device should be mounted separately.

Emergency events may occur in certain end devices in the network of Figure 16. For example, a heartbeat adjustment device may intend to send the irregularity in heartbeat to the external coordinator. A MAC protocol should support an emergency message handling mechanism for satisfying requirements of the emergency service. The emergency message handling mechanism should have a prior access device that allows fast and reliable delivery of emergency data and reduces power consumption not only in the coordinator but also in the end devices.

The conventional solution has proposed methods for handling delivery of emergency messages. In this case, however, it is assumed that a receiver is activated in all timings to receive some possible emergency messages, and a sender and the receiver operate in the same channel.

This assumption may not be effective for the network having power-limited low-duty cycling devices. In this case, after completing its data session, the device sleeps to conserve power. In addition, in some frequency bands (e.g., MICS), a network controller performs LBT to select a channel for network operations. The controller may select another channel for each network operation. Therefore, an embodiment of the present invention deals with the delivery of emergency data in the above scenario.

When emergency events occur, there are two possible cases, which include a case where piconets are operational (i.e., the coordinator is in an active state), and a case where piconets are nonoperational (i.e., the coordinator is in a sleep state). A description thereof will be made with reference to Figures 17 and 18.

Figures 17 and 18 depict the schematic diagram of transmission and reception of emergency messages from medical sensor (i.e., end device 160) to the coordinator 162 when coordinator is operational and non operational, respectively. On reception of emergency alarm message 164, the coordinator 162 sends acknowledgement message 166 back to the end device 160 in case it is operational. In this manner, the end device 160 having not been allocated resources goes to the emergency handling process upon receiving an Ack message after sending an emergency alarm message to the coordinator 162.

On the other hand, as in Figure 18, when the coordinator 162 is not operational, only the energy detector module 170 is kept on (details are discussed later). When the coordinator 162 is in a sleep state, the energy detector 170 is used as a wakeup device.

The energy detector 170 is in a duty cycle state, and a processor 174 is in an off state. On detection of energy due to emergency alarm message 164, the energy detector 170 triggers the processor 174 of the receiver 172, and then, the coordinator 162 sends acknowledgement message 166 back to the end device 160. The processor 174 is turned on after receiving the emergency alarm message. The idea of keeping only the energy detector 170 ON (not the complete receiver circuit) when coordinator 162 is not operational saves a lot of power consumption at the coordinator 162.

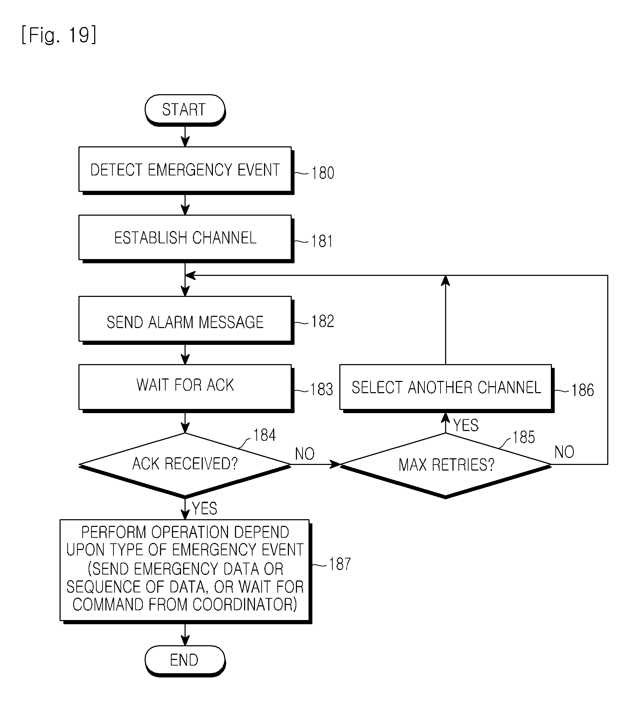

Sensor side or end device operation will be described below with reference to Figure 19.

When the emergency occurs, the end device 160 could be either awake or sleeping irrespective of state (operational or non operational) of the coordinator 162. The proposed invention covers the latter case. Emergency handling for former case (device is awake) can be handled by underlying channel access mechanism and is not within the scope of this invention. Figure 19 shows the flowchart of sequence of operations performed by the end device when emergency occurs. The end device operates in a POLL scheme of transmitting data in an allocation interval after receiving a POLL message from the coordinator. However, because the end device should actively deliver the emergency data upon detecting emergency events, it is preferable to operate as follows.

Following are the steps.

Upon detecting an emergency event in step 180, the end device 160 establishes a channel for transmitting an emergency alarm message in step 181. Specifically, the end device 160 selects the highest priority frequency channel. A channel selecting method may include a method of selecting any or optimal one of the channels the device can support or of the channels informed by the coordinator, and the channel selecting method is not limited thereto. The prioritization of channels is discussed later.

Thereafter, in step 182, the end device 160 transmits messages indicating occurrence of an emergency event to the coordinator 162 in the selected channel.

In step 183, the end device 160 waits for an acknowledgement (Ack) message from the coordinator 162 for a predetermined time after transmitting alarm messages.

In case of Ack received in step 184, the end device 160 performs an action according to the emergency event in step 187. In other words, the end device 160 performs an emergency action, i.e., acts according to the instruction conveyed by the coordinator 162 through Ack message. Accordingly, the end device 160 waits for the next message from the coordinator 162, or immediately sends one or multiple emergency data associated with the emergency event.

If Ack message is not received within a predetermined time in step 184, the end device 160 determines in step 185 whether its retry has reached the maximum retries (Max retries). If its retry has not reached the Max retries, the end device 160 returns to step 182 and repeats transmission of alarm messages until it receives an Ack message from the coordinator 162 in the selected channel.

In step 186, upon its retry reaching the Max retries, the end device 160 selects another channel to transmit alarm messages if no acknowledge message is received from the coordinator 162 in the previous channel. Accordingly, the end device 160 selects a new channel in the order of priority from the channel set, and repeats the transmission of alarm messages till an acknowledgement message is received from the coordinator 162. In other words, the end device 160 finds the channel used by the coordinator 162.

If all channels are exhausted, the end device 160 performs all above operation for finite number of times till Ack message from the coordinator 162 is received.

If there is no response from the coordinator 162, the end device 160 declares failure and stops the operation.

As described above, if no Ack message is received, the end device 160 repeats the process of re-sending alarm message and re-waiting for Ack message for the alarm message. If its retry exceeds the Max retries in this process, the end device 160 selects one channel from the remaining possible channels except for this channel in the same manner, and repeats the above operation.

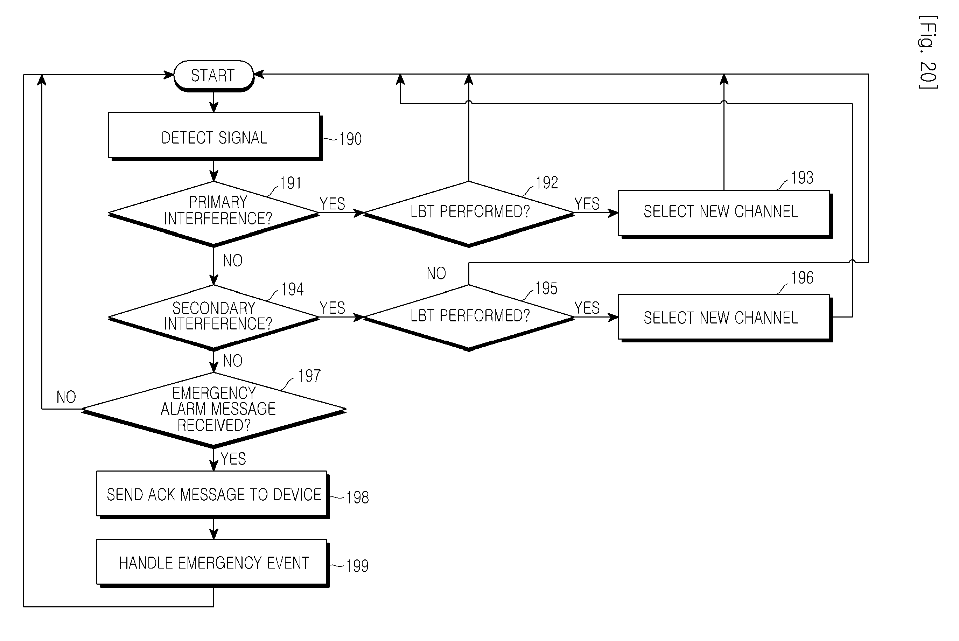

Coordinator side operations will be described below with reference to Figures 20 to 22.

When the emergency occurs, the coordinator 162 could be either operational (busy with other nodes in data transfer) or non operation. When the coordinator 162 is operational, the emergency is detected as the max reties is timeout due to forced collision. This will be discussed later in detail. When the coordinator 162 is not operational, its energy detector 170 is kept ON instead of complete receiver circuit. For further power optimization, duty cycling of the energy detector 170 is also allowed ensuring that the emergency messages can be detected with required reliability. As discussed before, the coordinator 162 cannot duty cycle on a fix channel because multiple networks have to co-exist within the available channels and also networks have to co-exist with other technologies in the same frequency band. It could be possible when emergency event occurs, some of the channels may be experiencing interference from other technologies. In that case, emergency data cannot be sent reliably on those channels. Therefore, a separate channel for emergency events cannot be fixed. The coordinator 162 always tries to duty cycle on channel with highest priority (the prioritization of channels is discussed later). This technique considerably reduces the effective time to detect the emergency events. Figure 20 shows the flow chart for sequence of actions performed by the coordinator 162 on detection of energy above a threshold while duty cycling.

Figure 20 illustrates an emergency operation performed when the coordinator 162 is in a sleep state, according to an embodiment of the present invention.

In step 190, the coordinator 162 determines whether signal or energy is detected, or whether internal timer is timeout.

If energy is detected due to interference (primary or secondary) in steps 191 and 194, the coordinator 162 performs channel scanning and selects another high priority interference free channel in steps 192 to 196. Upon detecting energy of specific level or more with the energy detector 170, the coordinator 162 finds a channel with the lowest interference through channel scanning to avoid primary or secondary interference.

If emergency alarm message is received in this state in step 197, the coordinator 162 sends acknowledgement message to the end device 160 in step 198, and handles emergency event in step 199.

If internal timer is timed out, the coordinator 162 looks for higher priority interference free channel than the current channel and starts duty cycling on that. Otherwise, if available, the coordinator 162 continues with the current channel.

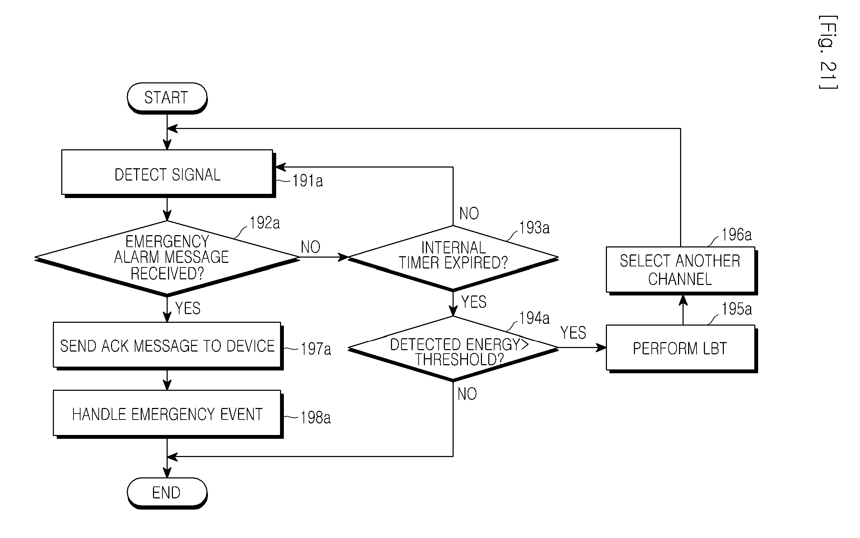

Figure 21 illustrates an emergency operation performed when the coordinator 162 is in a sleep state, according to another embodiment of the present invention.

Referring to Figure 21, upon detecting a signal in step 191a, the coordinator 162 determines in step 192a whether an emergency alarm message is received. If the detected signal is not an emergency alarm message, the coordinator 162 determines in step 193a whether an internal timer has expired. If the internal timer has not expired, the coordinator 162 repeats the above operation. Otherwise, the coordinator 162 determines in step 194a whether the detected energy is greater than or equal to a threshold.

If the detected energy is greater than or equal to a threshold, the coordinator 162 performs channel scanning such as performing LBT and then selecting another channel in steps 195a and 196a. If an emergency alarm message was received in step 192a, an operation in steps 197a and 198a is the same as the operation in steps 197 and 198 of Figure 20.

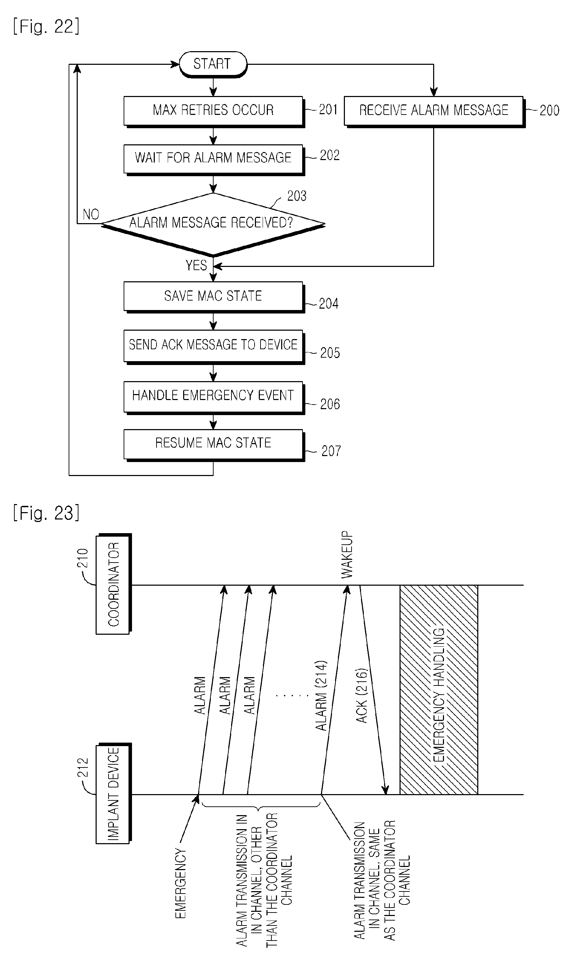

An emergency handling process when coordinator is not operational will be described below with reference to Figure 23.

Device notifies occurrence of an emergency event by transmitting an alarm message to coordinator. The device transmits alarm messages in a channel and then waits for an Ack message from the coordinator. If no Ack message is received from the coordinator in the previous channel, the device selects a new channel from the channel set and transmits alarm messages. The device repeats the transmission of alarm messages until Ack message is received from the coordinator.

With reference to Figure 23, a description will be made of the complete set of operations performed by implant device (hereinafter, sensor node) and coordinator together for fast and reliable handling of emergency event at the sensor node when the coordinator is not operational. Figure 23 shows sequence of operations for the exemplary scenario when the coordinator is not operational and is duty cycling at some interference free channel (not necessarily highest priority channel because of interference) when emergency event occurs at the implant device (hereinafter, sensor node) 212. The sensor node 212 starts transmitting the emergency alarm message in highest priority channel pre negotiated between the sensor node 212 and coordinator. After transmission of every emergency alarm message, the sensor node 212 waits for the Ack message. If Ack message is not received within a finite duration, the sensor node 212 retransmits emergency alarm messages.

The sensor node 212, in which emergency event has occurred, selects channels in order of quality based on a predetermined channel list between both ends, and transmits consecutive emergency alarm messages. An interval between consecutive emergency alarm messages is determined such that the sensor node 212 may receive ACK message from the coordinator. If the coordinator wakes up and receives an alarm message at a certain time, the coordinator goes to an emergency management process because it is performing duty cycling. In this process, the sensor node 212 may first send data, or wait for a command from the coordinator.

Once the sensor node 212 reaches to the channel exactly where coordinator is duty cycling, if it has transmitted an emergency alarm message 214, the coordinator 210 wakes up and receives the emergency alarm message and responds with the Ack message 216. The maximum number of emergency alarm messages transmitted by the sensor node 212 per channel depends upon coordinator's percentage of duty cycling, reliability and delay requirement of the emergency event. Once the Ack message is received by the sensor node 212, either the sensor node 212 waits for next command from the coordinator 210 or immediately transmits the emergency data as instructed by Ack message or depends upon emergency event profile known to both sensor node 212 and coordinator 210. Further sequences for emergency handling after detection of emergency alarm message is application dependent and out of the scope of this invention.

As described above, the coordinator is in a sleep state, and the coordinator is duty cycling in an interference free channel in the sleep state. The coordinator is duty cycling in a way of receiving at least one alarm message from the device. Upon detecting alarm message, the coordinator switches from the sleep state to the active state (emergency state), and sends an Ack message to handle emergency data.

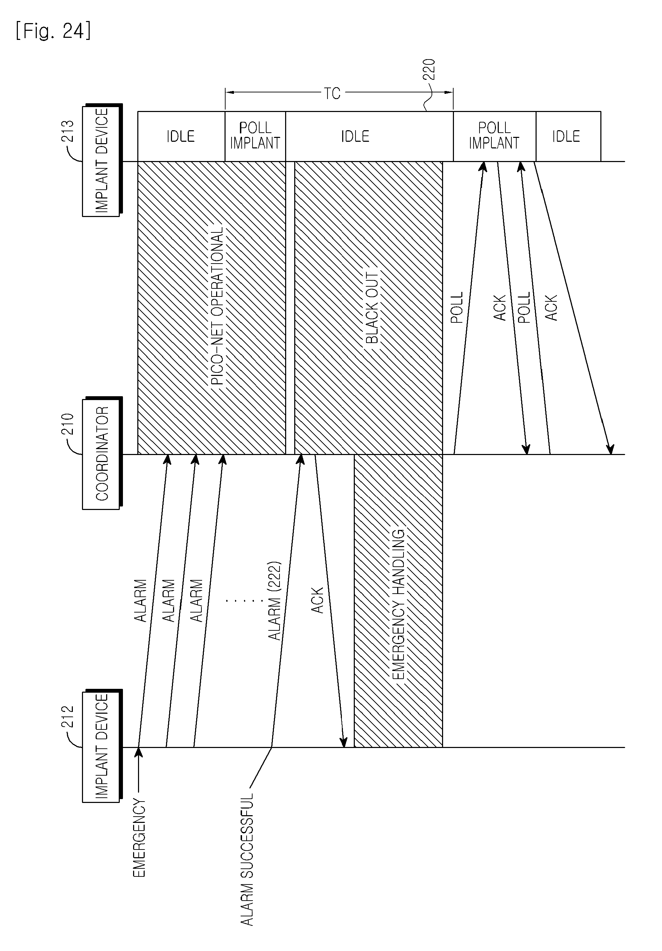

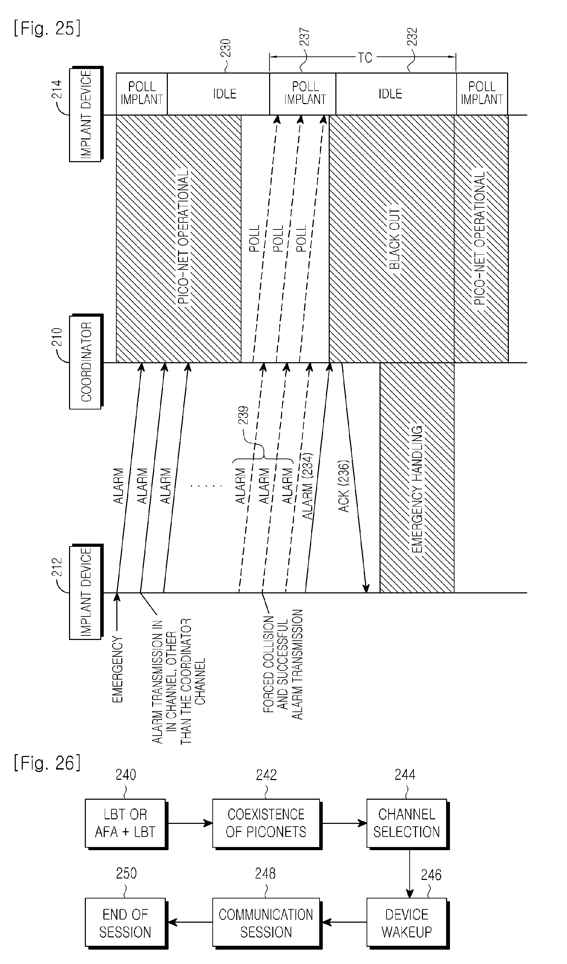

An emergency handling when the coordinator is operational using forced collision will be described below with reference to Figures 24 and 25.

A description will now be made of the complete set of operations performed by sensor node and coordinator together for fast and reliable handling of emergency at the sensor node when the coordinator is operational at some interference free channel or less interfered channel when emergency occurs at the sensor node. Figures 24 and 25 show sequence of operations for the exemplary scenario when the coordinator is operational and in either idle or in busy mode, respectively. The exemplary figures depict the emergency handling when coordinator is operational and controls the access of wireless communication channel using polling base mechanism. However, the same method of forced collision is applicable for any channel access mechanism.

The sequence of operations performed by the sensor node is same as previous condition when coordinator was not operational. This is because sensor nodes need not have to first find out whether coordinator is operational or not operational. The sensor node starts transmitting the emergency alarm message in highest priority channel, pre negotiated between the sensor node and coordinator. Two situations may occur in this case.

An emergency alarm message 222 can be received by coordinator 210 correctly when coordinator 210 is in idle portion 220 as shown in Figure 24. In contrast, as shown in Figure 25, when the coordinator 210 is in the idle portion 230, if this emergency alarm message is received, the emergency alarm message will collide with other data/management packets of operational network such as the implant device 213. When the coordinator 210 is in idle portion 232 and has received the emergency alarm message 234, it will send an acknowledge message 236 to the sensor node 212 as discussed before. On the other hand, when the coordinator 210 is in busy portion 237, the emergency alarm messages will collide with other management or data packets. Therefore, the coordinator 210 will not receive the emergency alarm message 239 successfully sent by the sensor nodes 212.

As described above, when the coordinator is in active state, multiple alarm messages from devices lead to forced collision in data of the coordinator, causing the coordinator to listen to the channel and receive alarm messages from the devices. Upon receiving alarm message after the forced collision, the receiver handles emergency messages generated from the devices.

Reference will be made to Figure 22 to describe operation in the coordinator. In this case, proposed invention uses the combination of forced collision and max retries timeout to detect the possible emergency events at the sensor node.

First, the coordinator 210 may receive emergency alarm message correctly in step 200 if it is in idle portion 220 as in Figure 24. Unlike this, as in Figure 23, if the continuous transmission 239 of emergency alarm messages from sensor nodes 212 collides with the multiple poll or data packets (forced collision), the max retries time out event is triggered at the coordinator side 210 in step 201. Upon detecting the collision, the coordinator 210 waits for mergence alarm messages, determining that mergence alarm messages are being delivered from the sensor node 212.

Upon max retries is timeout in step 201, the coordinator 210 suspends its normal operation and waits for the possible emergency alarm message from the sensor node in step 202. In other words, the coordinator 210 sets the Max retries and waits for emergency alarm message if data is not transmitted up to the Max retries due to continuous data transmission error.

If the coordinator 210 receives any emergency alarm message within a specific period of time in step 203, it sends acknowledge message back to the sensor node 212 in step 205 after storing MAC state up to now in step 204. Thereafter, the coordinator 210 handles the emergency event in step 206 and resumes MAC state in step 207. Otherwise, the coordinator 210 performs necessary actions (e.g. finding out the reason and selection of new channel) to handle the Max retries time out as specified by the MAC protocol. The idea of forced collision also works when coordinator is not operational but other coexisting networks are operational. In this case, the emergency alarm message will collide with the management or data packets of other networks and force them to suspend their operation by forced collision so that the emergency alarm messages can be correctly received by the coordinator of intended network.

Prioritization of channel at the coordinator will be described below.

As discussed in Figure 20, the sensor node sends emergency alarm messages in a predefined channel order. When non operational, the coordinator always tries to duty cycle on highest priority interference free channel. While duty cycling on a channel, the coordinator periodically looks for a higher priority interference free channel with the help of an internal timer. Most of the time, the coordinator would be listening at the higher priority channels. Therefore, when emergency occurs, the emergency alarm message is detected with the lower latency. The channel priority order is not fixed. The coordinator can select any channel priority order randomly and communicate it to the sensor nodes. The randomization of priority order at different networks avoids the collision between simultaneous emergency alarm messages in coexisting network.

### Method 3

This method relates to implant medical wireless communication between implantable medical devices such as glucose sensor and an on-body external programmer/data collector (coordinator). The proposed method enables the wakeup of an implant device by external programmer. The coordinator needs to wake up an implant device to start communications session with the Implant device. The proposed in-band wakeup mechanism is power efficient, reliable, and fast and in accordance with the rules of MICS medical implants communication defined by FCC. Implantable medical devices such as pacemakers typically have the capability to communicate data with a device called an external programmer or data collector via a radio-frequency telemetry link. One use of such an external programmer or data collector is to program the operating parameters of an implanted medical device and collect the medical sensory data from the implantable device.

The implantable devices are resource constraint especially in terms of power. They may use energy harvesting technique as their source of energy or a very thin film battery with limited power supply. Furthermore, once the device is implanted, the battery cannot be changed during its lifetime. The lifetime of implantable device could be from several hours to few years. The implant devices cannot be kept ON all the time, due to energy limitations. This constraint mandates the implant device to sleep most of the time when there is no communication required between device and external programmer.

In this case, whenever external programmer/data collector wants to set some parameter of the implant device or collect some sensory data from the implant device, it has to first wake up the device and then establishes a communication session. A single external programmer/data collector may be present to communicate with multiple implant devices in a star topology. Here, the definition of wakeup means making sure that implant device is listening on the same channel selected by the coordinator to start a communication session. According to MICS rules, the coordinator has to perform LBT (Listen Before Talk) before acquiring a channel to initiate a communication session. The coordinator can get any channel out of all available channels irrespective of channel used for previous communication for sufficiently large distance between consecutive communication sessions. The probability of getting a particular channel is assumed equally likely.

The use of inductive coupling (Non RF Method) between the antennas of the implantable device and an external programmer as a wakeup mechanism is very limited due to its short range coverage (e.g. few inches). The present invention tries to solve this problem by proposing an in-band (same RF for wakeup and data communication) wakeup mechanism in a manner which reduces the power requirements of implanted device, reduces wakeup latency and increases reliability of wakeup procedure.

Following problems are addressed by the method.

To avoid idle listening and overhearing which drains lot of power, implant devices are required to sleep as long as possible to increase the life time of the device. In order to start a communication session with the sleeping implanted device, a power efficient, less complex and fast wakeup mechanism is required. The out-of-band wakeup solutions require additional transceiver circuitry which increases the complexity and cost of the system and not suitable for resource constraint implant devices. Therefore an in-band wakeup mechanism is required.

Non RF wakeup mechanisms are limited in range (few inches).

In case of multiple implant devices, one-by-one wakeup may lead to intolerable latency and high power consumption. Therefore, a multiple wakeup (simultaneously waking up multiple devices) mechanism is required.

A separate channel for wakeup cannot be fixed for any operation by any entity as per the FCC guidelines.

While duty cycling, an implant device may receive interference from data transmission of other device in a communication session. This may lead to additional unwanted power consumption of the device.

Therefore, the present invention is to show a method for implementing wakeup in MICS band. Communication for implantable medical devices using MICS band has MICS restrictions and implementation constrains. According to MICS restrictions, coordinator should always perform Listen Before Talk (LBT) before securing channel to start communication session. Using the same RF in the same band is simple in environments such as sensors because of low technical and cost burden.

Figure 26 shows the general sequence of operations performed by the coordinator to accomplish a data communication task with the implant device(s). In order to start a communication session with the implant device(s), the coordinator has to first select an interference free channel by performing listen before talk (LBT) and ensuring that no other implant network or primary user (the licensed user of allocated spectrum) is already present in the channel.

If there is no free channel available, then it tries to coexist with other networks using suitable co-existence mechanism (242). The initial two steps (selection of channel and coexistence) are out of the scope of this invention. After successful channel selection (244), the coordinator needs to wake up the device(s) with whom it wanted to start a communication session (246). Thereafter, the coordinator performs session communication (248), and then ends the session (250). The proposed mechanism considers star topology network with end nodes (implanted devices) and a single coordinator responsible for collection of sensory data from the devices and/or setting parameters to the devices.

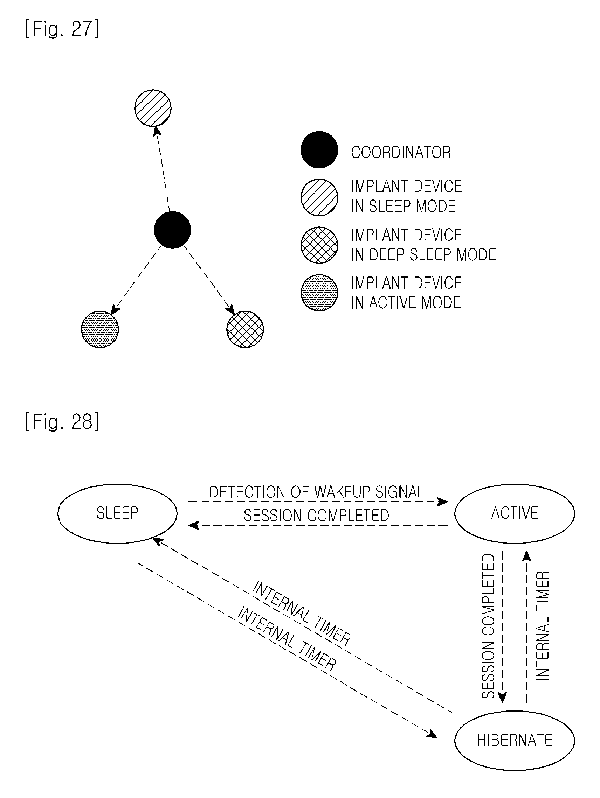

Figure 27 shows an exemplary diagram of star topology and medical implanted sensor nodes with different states.

As illustrated in Figure 27, implant device could be in one of the three states: Active, Sleep or Hibernate (deep sleep).

In the case of active state, device is already awake and involved in data communication with the coordinator. Sleep and wakeup at macroscopic level inside a data communication session is responsible for channel access mechanism and is out of the scope of this invention. In this disclosure, active state means that device is already awake and there is no need to wake up the device by the coordinator.

In the case of sleep state, device is duty cycling in a low power mode (most of the receiver circuit is switched off except wakeup detector) to receive the wakeup signal.

In the case of hibernate state, the transceiver of the implant device is completely off and only the internal timer in the device is running to facilitate self wakeup.

Figure 28 shows the transition diagram between all three states.

In the case of hibernate mode, most of the time, it may be possible for the coordinator to decide a periodic schedule of communication session or the next expected time for communication session with the implant device. For example, it is possible to sample glucose level every day at some specified time. In this case, the coordinator may instruct the implant device to go into hibernate state (a state in which complete transceiver circuit is switched off) and start duty cycling just before next expected/scheduled communication session. Hibernation mode is always preferred for implant sensor devices. However; it should be optional for those types of applications which require frequent intervention of external programmer/data collector (coordinator).

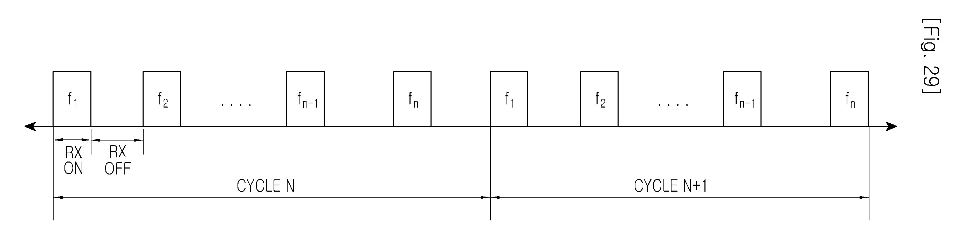

In the case of wakeup mechanism, as already discussed, a channel for wakeup cannot be fixed. In order to correctly receive the wakeup signal while sleeping, the energy detector of the implant device duty cycles at all the available frequency channels one by one in a periodic manner as shown in Figure 29. Implant device with energy detector performs duty cycling by alternately turning on and off the reception state from a channel fl to a channel fn according to a specific period.

The actual ratio of Rx_ON and Rx_OFF time while duty cycling, depends upon latency, reliability and power consumption requirements of the system. Increase in the ratio of Rx_ON to the Rx_OFF reduces wakeup latency and increases reliability and power consumption.

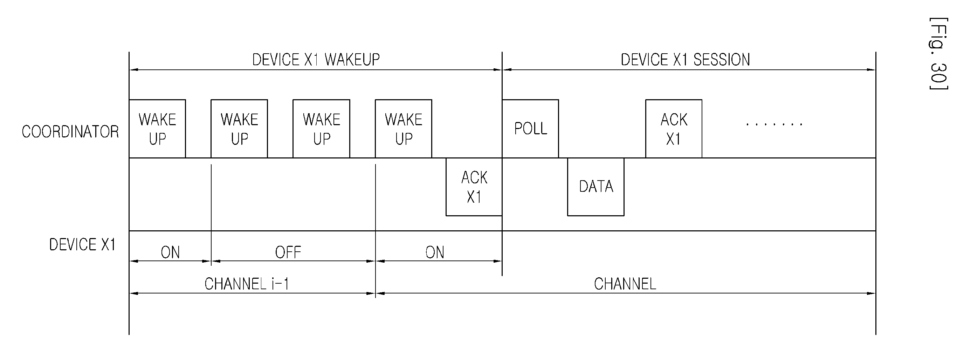

Referring to Figure 30, coordinator sends consecutive wakeup signals in a specific channel, and if end device, which has been duty cycling while changing channels, receives the wakeup signal, data session begins. When sending wakeup signal, the coordinator sends a connected end device the wakeup signal with a known address, and sends an unconnected end device the wakeup signal with a device address. Commonly, IEEE address is a representative device address.

In the case of single device wakeup mechanism, coordinator shall employ this mechanism to wake up an implant device as described below.

Unicast wakeup mechanism shall be employed to wake up an implant device whose address is known to the coordinator. It could be device MAC address or a comparatively small logical address assigned by the coordinator to the device.

When the wakeup procedure starts, coordinator shall send a wakeup message to the implant device asking for immediate acknowledgement, address of implant node as destination address, session start time and approximate session duration and then wait for an acknowledgement from the implant device. A 'type' field of size one bit in the wakeup message can be used to distinguish between the single and multiple wakeup (lockup) messages.

If the 'type' bit is reset, the message is considered as single wakeup message. Conceptually, any bit available in the header can also be used as 'type' bit to save extra bit requirement. For example, since 'more data' bit present in the header is only applicable to DATA frames, it can be utilized as 'type' field for wakeup message to distinguish between the wakeup and multicast wakeup (lockup) messages.

To wake up an unconnected device with known IEEE address, coordinator shall send a wakeup frame to the node with ACK policy set to immediate-ACK, IEEE address as recipient address in the wakeup frame payload, session duration and time to start the session in the frame payload, and then wait for an ACK frame from the node.

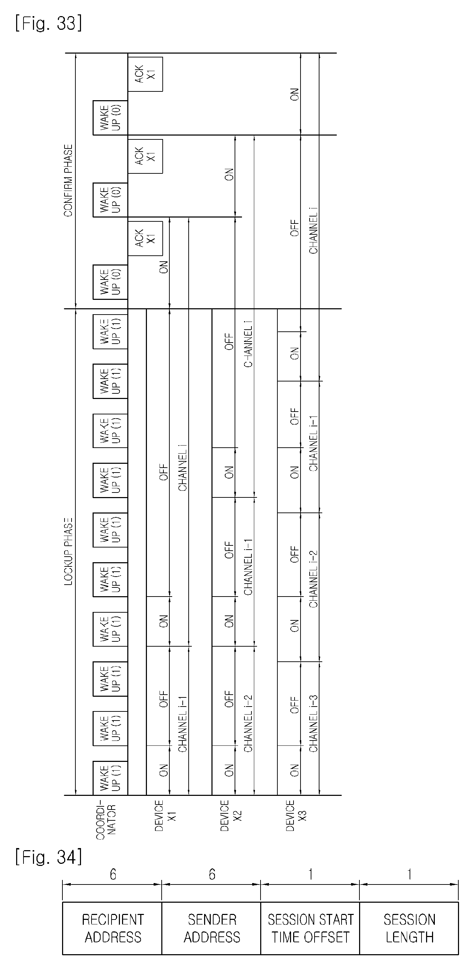

To wake up a connected device, coordinator shall send a wakeup frame to the node with ACK policy set to immediate-ACK, with connected id as recipient ID, and session duration and time to start the session in the frame payload, and then wait for an ACK frame from the node. Content of wakeup message payload is shown in Figure 34. As shown in Figure 34, the wakeup message includes destination address, origination address, session start time offset, and session length.

If it failed to detect acknowledgement in a finite duration (time required by implant device to process a wakeup message and reply with an ACK), then it shall send another wakeup frame to the device. The coordinator shall send wakeup frames until it receives an ACK frame from the node, with maximum number of consecutive wakeup frames. The maximum value shall depend upon the duty cycle of the implant device in the not-in-session state. The transmission of multiple wakeup frames ensures that device receives at least one wakeup frame while duty cycling. The duty cycle of implant device in not-in-session state depends upon the wakeup latency, reliability and power consumption requirement of the implant device.

The implant device, when not-in-session state, shall duty cycle on all available channels, one by one in a periodic manner. Upon successfully receiving wakeup message, implant device shall send an acknowledgement to the coordinator. After transmission of ACK message, the implant device can go back to sleep and wake up at the time as defined by the session start time in the wakeup message. This saves considerable power of implant device by not waiting for their poll messages so long. After finishing wakeup procedure, the coordinator may send a Poll message granting a polled allocation for the implant device to initiate its own data frame transaction.

While duty cycling in not-in-session state, after receiving a wakeup frame in a channel, unintended implant device exclude that channel for duty cycling for session duration specified in the wakeup frame. The device shall resume the duty cycling in the channel, after the session expires. In case the coordinator does not want non-intended devices to exclude the channel from duty cycling, the coordinator can set the session duration value to '0'. This is particularly useful when coordinator is trying to wakeup multiple devices one by one using single device wakeup mechanism. Although the latency of this procedure is higher than multiple device wakeup, the difference is not significant in case the number of devices is very less. Additionally, While duty cycling in not-in-session state, after receiving interference in a channel, unintended implant device exclude the channel from duty cycling for a fixed time. The device shall resume the duty cycling in the channel, after the time expires.

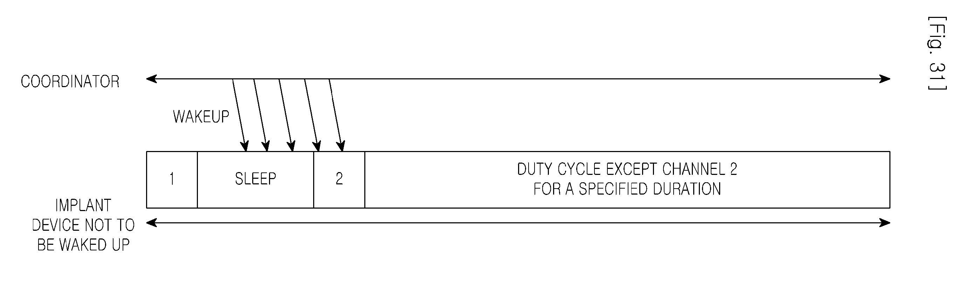

An example is shown in Figure 31. While duty cycling in channel '2', device receives a wakeup signal which is not intended for it and stops duty cycling in channel '2'. In this manner when the coordinator starts a communication session with implant device(s), all other devices which are not part of active session stops duty cycling on that channel in which communication session is established and avoid overhearing due to regular data communication. Similarly, if a device receives interference due to data communication of its own piconet while it is in non-in-session state (not part of the session), it stops duty cycling on that channel for fixed duration.

Figure 31 illustrates a case in which upon receiving a wakeup signal which is not designated thereto, device helps operation of a data session between actually designated deice and coordinator by not performing duty cycling on the band during a specific time.

Sometimes, it may be possible that already a data communication session is active with other implant nodes when coordinator wants to wake up an implant device. As discussed before, to avoid overhearing due to interference, the devices stop duty cycling in the channel in which active session is operational. In this case, the coordinator cannot send wakeup signal on the same channel to wake up the device. Furthermore, if the coordinator uses the same channel in which active session is operating for wakeup, this will lead to overhearing of wakeup signals for the devices which are part of active session. To avoid this problem, coordinator selects a new interference free qualified (according to FCC regulations) channel and performs wakeup in newly selected channel. In this way, the devices which are already part of active session do not receive the wakeup signal sent by coordinator, thus avoiding overhearing. Figure 30 shows the example of single device wakeup mechanism with three devices where coordinator wakes up each device individually one by one.

In the case of multicast device wakeup mechanism, coordinator shall employ this mechanism to wakeup multiple implant devices as described below.

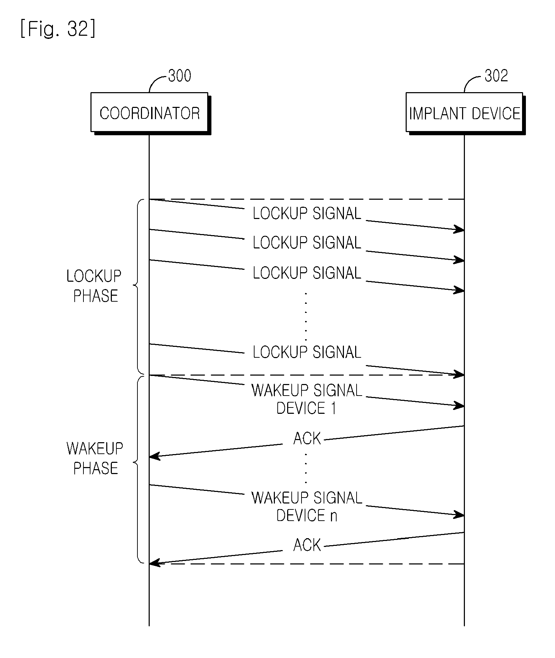

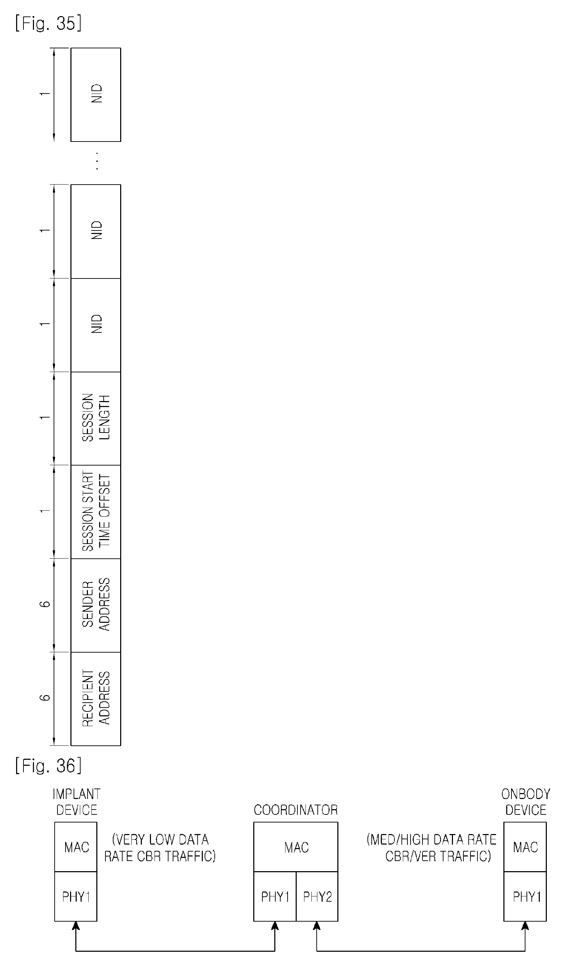

A proposed wakeup method for multiple implant end devices will be described below with reference to Figure 32. Having been performing duty cycling while changing channels as in Figure 29, end device shall receive a lockup signal that coordinator transmits on a specific channel in a lockup phase. Upon receiving the lockup signal, interpreting a Session Start Time Offset value included in the lockup signal in the wakeup frame format as in Figure 35 as its wakeup start time, the device turns on its reception mode at the time while waiting in the current channel in an Off state, and waits for a wakeup signal. A wakeup signal in wakeup step is the same as the message in a single wakeup.

Coordinator must have selected a MICS channel following the MICS regulations and shall send the wakeup messages in the selected channel to wakeup connected devices. The connected devices are those devices which have already been assigned unique and multicast address by the coordinator. Multicast wakeup has two phases: Lockup and Wakeup or Confirm.

When the Lockup phase starts, coordinator shall send a lockup frame (multicast wakeup frame) to multiple connected nodes with Ack policy set to No-ACK and type bit set to 1, session duration and time to start the session in the frame payload. The destination address of lockup frame can either contain the list of address of individual devices or a multicast id to a group of nodes, if assigned. Content of multiple wakeup frame payload is shown in Figure 35. A single wakeup frame payload is as shown in Figure 34.

The coordinator shall continuously send *a finite number of* numbers of lockup frames without expecting acknowledgment (Ack) from any connected device. The number of lockup frames shall ensure that every connected device shall receive at least one wakeup frame.

To wakeup devices belonging to a single group, coordinator shall transmit lockup frame with multicast id or BroadcastID as the destination address.

Upon successfully receiving a lockup frame, intended connected device shall lock itself to the channel in which it received the lockup frame, and wait for wakeup frame in the confirm phase in the same channel. Intended connected device shall interpret the time to start session field information as time to start it's confirm phase and may become active only at that time, after lock up.

In 'confirm' or 'wakeup' phase, coordinator shall send a wakeup frame to individual connected devices one by one in any desired order. It is noted that these wakeup frames sent in confirm phase are the same as used in single device wakeup. Coordinator shall send one wakeup frame to a connected device, with Ack policy set to Immediate-ACK and type bit set to 1, and address of the connected nodes. Upon successfully receiving the wakeup frame, device shall send an ACK frame to the coordinator. On receiving ACK from the device or on expiry of ACK receive time from the device, coordinator shall send wakeup frame to next device in the order. After completion of one round of lookup and wakeup phase, coordinator shall send lockup frame to the devices that have not acknowledged in the confirm phase. Figure 31 shows the concept of lockup and wakeup (or confirm) phase.

While duty cycling in not-in-session state, after receiving a wakeup frame in a channel, unintended connected device excludes that channel for duty cycling for session duration specified in the wakeup frame. The device shall resume the duty cycling in the channel, after the session expires.

Figure 33 shows the example of multiple device wakeup where coordinator wakes up three devices simultaneously.

### Method 4

This method relates to Poll based ultra low power channel access and simultaneous operation of multiple BANs in medical implant communications. The Medical Implant Communications Service (MICS) is an ultra-low power, unlicensed, mobile radio service for transmitting data in support of diagnostic or therapeutic functions associated with implanted medical devices. The MICS permits individuals and medical practitioners to utilize ultra-low power medical implant devices, such as cardiac pacemakers and defibrillators, without causing interference to other users of the electromagnetic radio spectrum. In medical implant communication, the base station (external programmer or data collector) is located either on body or out of body (within a limited range of 2-3 meters) and one or more medical implanted devices form a single hop star network.

The IEEE is already working on a standard, Body Area Network (BAN, IEEE 802.15.6) to standardize all wireless Medical and Non Medical applications running in and around the body. The MICS band (402-405 MHz) has been allocated by FCC for medical implant communication with certain regulations for the use of band to avoid interference to primary users (metrological satellite users) of the same band. These rules and regulations make the design of channel access mechanism for implant medical communication different from traditional MAC design.

Figure 36 is an exemplary illustration of a network with a single MAC layer and two physical layers according to an embodiment of the present invention.

A certain communication network may include multiple data rates under different traffic scheme, for example, constant bit rate traffic, variable bit rate traffic, best effort traffic, and traffic of each scheme. Combinations of traffic schemes and data rates may come to traffic of a unique class. Traffic of each class may have a different QoS requirement. It is preferably to design a MAC protocol satisfying various sets of QoS requirements. The conventional solution may lie in MAC capable of obtaining various sets of QoS requirements for traffic of different classes. However, it is assumed that all traffic is generated in devices or systems having the same physical layer.

On the other hand, as shown in Figure 36, the present invention relates to traffic of multiple classes, generated from devices (implant devices or BAN devices) with different physical layers. The different physical layers mean transceivers operating in different frequency bands (e.g., frequency of UWB (3.1 to 10.6 GHz) for BAN, and medical frequency of 401 to 406 MHz for implant). The present invention proposes a MAC protocol capable of satisfying various sets of QoS requirements in a network with the scenario shown in Figure 36.

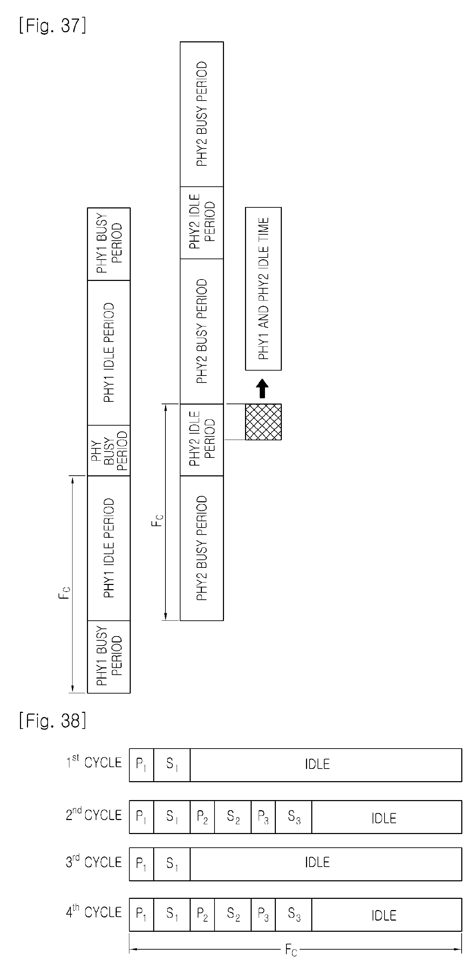

Figure 37 is an exemplary representation of a single MAC frame structure with polling cycle according to an embodiment of the present invention.

In a device with a single MAC and two PHYs, the MAC shares time with PHY1 and PHY2. This design guarantees that separate PHY1 and PHY2 are not busy at the same time, and one of the transmission structures (PHY1 and PHY2) is used by MAC at a certain time. Busy period of PHY1 and PHY2 is handled by power efficient polling mechanism.

Following are the problems addressed/solved by the invention.

A Media Access Control (MAC) protocol is required to enable the use of MICS for medical implant communication. The existing MAC protocols for wireless communication are not suitable for implant medical communication because of different QoS requirements and FCC regulations for the use of MICS band.

The lifetime of implant device may range from few hours to 2-3 years and they are highly resource constraint especially in terms of power. Unlike traditional wireless networks, it is hard to charge/replace the exhausted battery. Therefore, maximizing the lifetime of the implant devices becomes primary objective, leaving the other performance metrics (e.g. bandwidth utilization) as secondary. The invention proposes a contention free based simple and ultra low power media access control protocol for star topology implant network, which minimizes the energy waste due to idle listing, overhearing, packet collision and packet control overhead.

The medical implant communication may be compared with the wireless sensor networks where one or more sensors (implant device) sense and send the data to the base station node (external programmer or data collector). The nature of communication pattern is mostly convergecasting (many to one): process of data collection from all or set of sensor node in the network towards the base station. Most of the MAC protocols for wireless sensor network are designed for multiple hop network topologies and are not optimized for single hop star network, which is the primary concern of medical communication. The design of proposed MAC protocol is customized according to the topological requirement of implant medical communication, which makes it simple and power efficient.

The reliability of medical communication is higher than traditional wireless sensor networks. Therefore, reliability requirement is critical to be met by any MAC protocol designed for medical communication. The use of current FEC and ARQ mechanisms increases the complexity and power requirement of devices. The proposed poll based contention free channel access mechanism provides in built reliability mechanism to support higher reliability requirement of medical implant collision.

The medical emergency events are one of the differentiating elements of implant communication to the other wireless networks. The emergency handling is critical and it should be handled very fast with high reliability. The proposed MAC provides a fast and reliable channel access mechanism to handle the medical emergency events.

Sometimes, implant medical applications may coexist with on-body applications. In other words, a single external programmer with dual interface may exist to communicate with implant as well as on-body devices. In this case, a transparent single MAC is required to support implant and on-body communication simultaneously. Normally, implant medical communication demands more stringent QoS than the on-body communication. The MAC should provide priority to implant communication over the on body.

The FCC poses some restrictions on the use of MICS channel for implant medical communication. The proposed MAC is complaint to regulations imposed by FCC for implant communication.

According to upcoming IEEE standard for Body Area Network (IEEE 802.15.6), at least 10 coexisting implant networks should be efficiently supported by the MAC protocol. Sometimes, it may be required for the two or more networks to coexist in the same channel and share bandwidth when less than 10 channels are available. The proposed coexistence mechanism for implant communication also provides a method to share the channel between multiple coexisting implant networks.

The implant data communication requirement is very simple. The coordinator has to collect medical sensory data from the medical implant device periodically or on demand. Once the communication session is active between coordinator and implant device, the length of typical sessions ranges from few ms to seconds. The coordinator may select multiple implant devices as part of one data communication session, if data from multiple devices needs to be collected simultaneously. The support for star topology is required to facilitate a data communication session with multiple implant devices. Figure 27 shows exemplary star topology for implant communication. The implant device would sleep if it is not part of an active data session until waked up by the coordinator except in case of emergency event. Figure 26 shows the proposed sequence of operations performed by coordinator to establish a communication session with implant device to get the sensory data.

The first step to start a communication session is to perform Listen Before Talk (LBT) on all available channels and select an interference free channel for data operation. If no interference free channel is available, then coordinator shall try to coexist with other implant networks (piconet) and share the bandwidth with them. The coexistence mechanism to share the channel will be discussed later. After successful channel selection, the coordinator needs to wake up the implant device(s). Once the session is established, the core channel access mechanism takes over and handles the collection of data from different implant devices. After completion of data operation, the coordinator terminates the session and devices go back to sleep.

As discussed before, the contention based channel access mechanisms are not suitable for implant communication because they are not power efficient and do not follow FCC rules to access MICS band. Moreover, the contention free channel access mechanisms which are based on periodic transmission of beacons to maintain synchronizations between implant device and external controller are also not in accordance with FCC rules.

Some of the FCC rules for use of MICS band are:
No medical implant device shall transmit, except in response to a transmission from a medical implant controller (i.e. when patient's health is at risk), medical implant events' non-radio frequency actuation signal generated by an external device.

Channels authorized for MICS operation are available on a shared basis only and will not be assigned for the exclusive use of any entity.

Within 5 seconds prior to initiating a communications session, medical implant controller must monitor the channel or channels the MICS system devices intend to occupy for a minimum of 10 milliseconds per channel (LBT or LBT+AFA)

Channel access mechanism for implant is as follows.

The proposed channel access mechanism for implant communication is power efficient, light weight and complaint to the MICS rules for implant communication. The external controller defines a static poll schedule for each implant device based on their power and QoS requirement and traffic characteristics. The fixed poling schedule facilitates sleeping of implant device between consecutive poll durations to save further power consumption. The coordinator sends POLL message to the device at its scheduled time. After reception of poll message, implant device sends data to the coordinator. The coordinator acknowledges the receptions of data by sending ACK message back to the device. The sequence of operations completes single data transaction. After successful completion of single transaction, the implant device goes back to sleep and wakes up just before its scheduled poll time to receive the next poll message. The duration that a device has to wake up before its scheduled poll time, depends upon poll period and clock drift of the device.

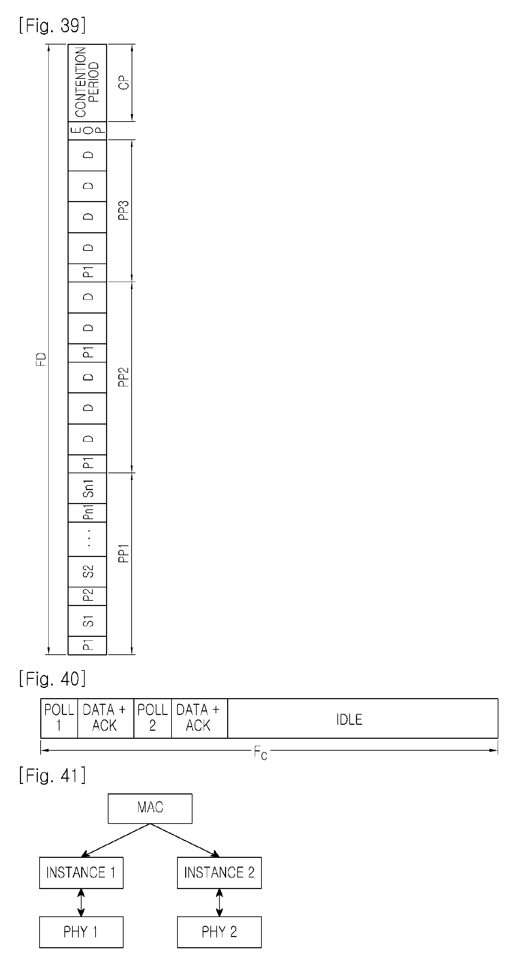

In case multiple devices are parts of active data communication session, the devices are polled in a round robin fashion. The frame cycle to perform round robin is fixed and consist of two portions: Poll period and idle period as shown in Figure 40. The idle period is used to handle the error and coexistence with other implant networks. The devices can be polled using one of the two following schemes.

### Scheme 1: Single Poll Rate

In this case, all the devices are polled with the same rate determined by the coordinator according to the maximum packet arrival rate among all the devices. In this method, each device is polled in every frame cycle. This method is particularly useful when most of the devices have homogeneous packet arrival rate. Otherwise, low duty cycle devices (small packet arrival rate) suffer from excessive polling even they don't have the data to transmit. This leads to more power consumption of low duty cycle devices due to reception of extra poll messages.

### Scheme 2: Differential Poll Rate

In this case, the devices are polled according to their packet arrival rate. The poll rate for a particular device is always a multiple of frame cycle in power of 2. For example, if the frame cycle length is Fc, the poll rate can only be Fc, 2Fc, 4Fc, 8Fc·····. The devices with higher polling rate are always polled ahead than the lower poll rate. This mechanism facilitates easy implementation and avoids the gap between two devices in frame cycle thus maximizing the idle period. It is to be remembered that idle period is used to facilitate the coexistence of other implant networks in the same channel. The nearest polling rate is selected for a device according to its packet arrival rate.

Figure 37 shows the channel access mechanism with differential poll rate. The devices with poll rate Fc are polled in every frame cycle and the devices with poll rate 2Fc are polled in every two cycle, and so on. This method is useful when devices with different packet arrival rates are present in the active data session to save the power of low duty cycle devices due to overhearing of extra poll messages. Figure 38 is an exemplary representation of polling frame structure for implant communication, in which the polling cycle for PHY 1 is shown. Every polling cycle includes a busy period and idle period. Devices are polled during the polling cycle. Devices have different polling rates based on the data arrival rates of the devices. For example, device 1 is polled with a rate twice than the device 2 and device 3. The device with higher polling rate is polled earlier than lower polling rate devices to avoid creation of idle time in the polling cycle. This helps in better management of sleep or wakeup schedule for devices which helps in low power consumption at the devices.

Figure 39 is an exemplary representation of polling frame structure for on-body communication, in which the polling cycle for PHY 2 is shown. The polling cycle include polling period, contention period and idle period. Devices are polled during the polling cycle. Device generating Constant Bit Rate (CBR) data have fixed poll time in the poll period and device generating Variable Bit Rate (VBR) traffic may have variable poll time in the poll period. Fixed poll time helps in low power consumption at the devices. The devices are allocated transmission duration based on the arrival rates. Upon poll, a device can transmit data for allocated duration. Such allocation helps in low power consumption and meeting the QoS requirements of the application.

Some of the applications have high reliability requirements. Such applications can tolerate Packet Error Rates as high as 10⁻². MAC protocol is required to provide an error recovery mechanism to achieve the desired reliability.

As regards Power Management, sleep and wakeup across superframe(s) will be described below.

The scheduled and delayed polling channel access mechanisms facilitate device to sleep between their consecutive polls. The length of the time a device can sleep depends upon its poll rate. The device needs not have to wake up at every superframe if it is being polled after multiples superframes. Once the device is awake in poll period, it can go back to sleep as early as possible with different power saving options.

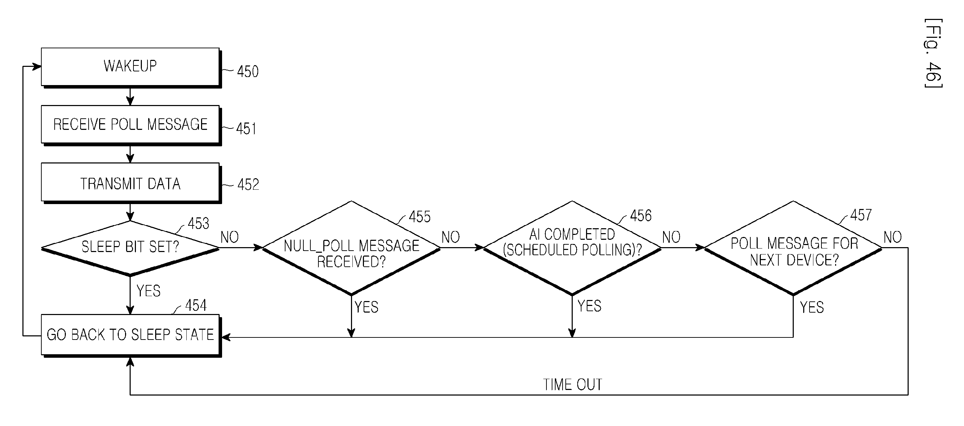

A flow of scheduling sleep state of device based on 'sleep' bit in received POLL message will be described below with reference to Figure 46.

Upon receiving POLL message in step 451 after waking up in step 450, device transmits data in step 452.

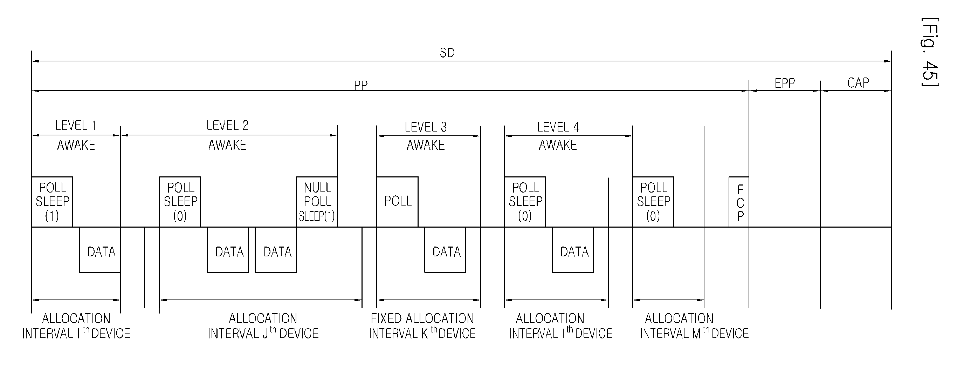

The power saving options provides the flexibility to the device to save the power. Different level of power save options facilitates the device to go back to sleep as early as possible after completion of data transaction with the coordinator. As shown in Figure 45, there are four different levels and each level defines how early the device can go back to sleep after data transmission requested by the coordinator through the poll message.

In the case of Level 1 in Figure 45, device can directly go to sleep after transmitting requested number of data packets by the coordinator in step 454, if "sleep" bit in the received POLL message is set in step 453.

In the case of Level 2 in Figure 45, if "sleep" bit is not set in the received POLL message in step 453, the device can wait for NULL_POLL message from the coordinator to go back to sleep after transmitting requested number of data packets by the coordinator. If the NULL_POLL message is received in step 455, the device may go back to sleep.

In the case of Level 3 in Figure 45, the device waits until allocation interval is completed if no NULL_POLL message is received, in case of scheduled access. Thereafter, the device determines in step 456 whether allocation interval is completed by performing scheduling polling. In this manner, the device can go back to sleep after completion of scheduled access interval.

In the case of Level 4 in Figure 45, the device waits for POLL message of the next device if the allocation interval is not completed in step 456. In case of delayed poll access, the device can go back to sleep in step 454, upon receiving POLL message for the next device in step 457.

In Single MAC, sometimes, implant medical applications may coexist with on-body medical applications. In other words, a single external programmer may be capable of communicating with implant as well as on-body devices through dual PHY interfaces. In this case, a transparent single MAC is required to support implant and on-body communication simultaneously. Most of the current MAC although support multiple PHY but not at the same time. This unique requirement of medical communications both implant and on-body running simultaneous poses the requirement of a single transparent MAC running over two PHYs. Unfortunately, it is not always possible to design a single PHY for both implant and on-body application because of difference between in-body and on-body channel models.

One way to achieve this is by having two MAC instances running independently over separate PHY in a single processing unit. The concept is shown in Figure 41. This kind of implementation requires high end processor to support multiple instances of MAC running at the same time, which increases the complexity and cost of the system. Moreover, most likely, the MAC and PHY go together in a single hardware chip; in this case, it is very difficult to implement two MAC states in hardware. The software solutions are slow and require additional task manager to switch between two MAC states, causing additional overhead of context switching.

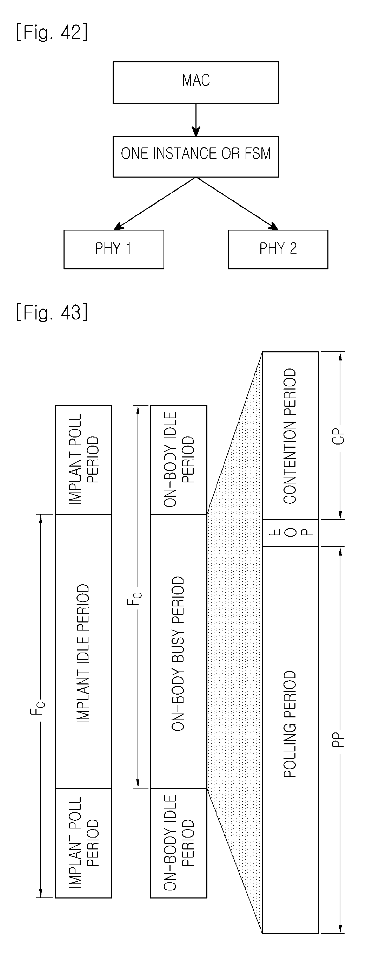

The proposed single MAC design to deal with simultaneous operation of multiple PHY uses time sharing between two PHYs. As shown in Figure 42, there is only one MAC instance which takes care of both the PHYs in a time shared manner. This approach is simple and does not require any high end processor to run MAC protocol. The method is only application to star topology network where a single node (external controller) manages the allocation of resource to the implant and on-body devices.

In the proposed single MAC design, implant devices are given higher priority than the on-body device. The on-body device will utilize the idle period of implant frame cycle as shown in Figure 43. Although the approach is not very bandwidth efficient, it allows the simultaneous operation of implant and on body simultaneously in a simple and power efficient manner.

Figure 43 shows an exemplary single MAC frame structure.

Polling based channel access mechanism is proposed for T0, T1, T2 and T3, and contention based channel access mechanism is proposed for T4. Single MAC architecture is proposed for T0, T1, T2, T3 and T4.

In an embodiment, the present disclosure relates to the single MAC architecture for T0, T1, T2, T3 and T4. In one embodiment, the present disclosure relates to the power efficient polling mechanism for T0, T1, T2 and T3. In one embodiment, the present disclosure relates to packet error recovery mechanism for T0, T1, T2 and T3. In one embodiment, the present disclosure relates to handling of emergency messages in a network with T0 and T1 traffics. In one embodiment, the present disclosure relates to single and multiple device wakeup in a network with T0 and T1 traffics. In one embodiment, the present disclosure relates to co-existence of multiple piconets generating T0 type of traffic. In one embodiment, the present disclosure relates to fulfillment of diverse set of QoS requirements of T0, T1, T2, T3 and T4 classes of traffic by proposed polling based channel access mechanism.

In Single MAC Operation of Coordinator, in the presence of implant and on-body devices at the same time, the coordinator establishes a single star topology network for all (implant and on-body) the devices. A poll cycle is defined to complete the data transaction operation with the devices based on QoS requirement of both the implant and on-body devices, the number of devices for implant and on-body, and PHY data rates for each interface.

The implant devices are polled first to give the priority over the on-body applications. The poll period for on-body devices depends upon dynamic requirement of implant applications. The retransmission of implant devices due to packet loss is handled first before moving to the polling of on-body devices. After the completion of implant poll period, the coordinator saves the context information for implant devices and reloads the on-body device context to continue with the polling of on-body device, and vise versa.

In the case of Piconet Coexistence, as per IEEE technical requirement for Body Area Network (BAN), at least 10 implant piconets should be able to coexist within a limited 6X6X6 meter cubic space. Sometimes, it may be possible that all 10 channels of MICS band (402-405 MHz) are not available due to the presence of primary users or other source of noises. In that case, it becomes necessary for two or more implant networks (piconets) to coexist in a single channel on time shared basis.

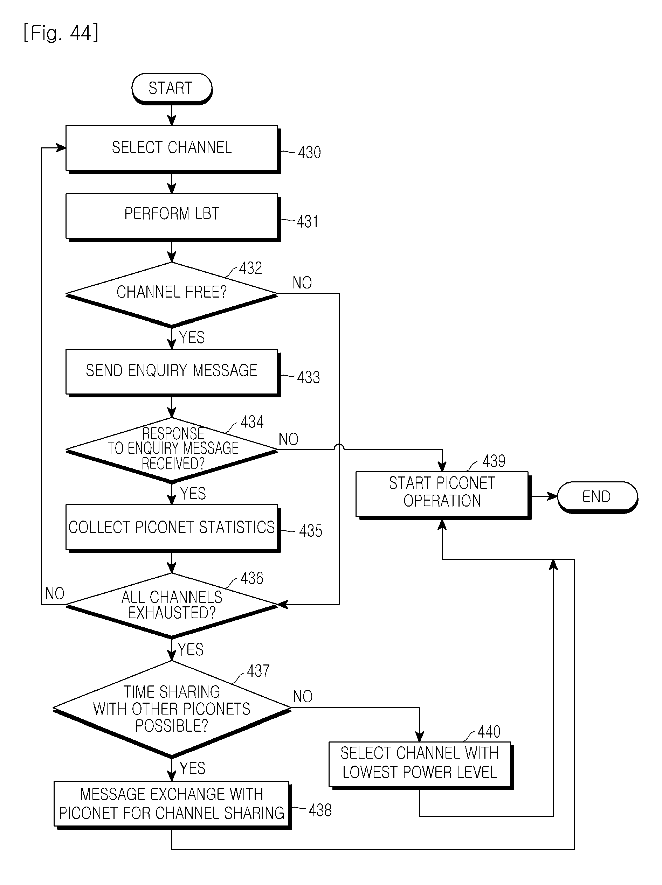

The proposed invention provides a mechanism to support coexistence of multiple piconets in the same channel. Efficiency of proposed mechanism depends upon topological changes and per piconet load. Following are the operations performed by an external controller to start a piconet and try to coexist with other networks. The flow chart of the proposed protocol is shown in Figure 44.

The external controller selects a channel in step 430.

Thereafter, in step 431, the external controller performs Listen Before Talk (LBT) for the time as specified by FCC rules. In step 432, the external controller determines if the channel is free. If the channel is not free, the external controller determines in step 436 whether all channels have been exhausted. If all channels have not been exhausted, i.e., if the channel is found busy, the external controller selects another channel in step 430 and repeat the operation. If the channel is free, the external controller sends an enquiry message to confirm the presence of another piconet in step 433.

If no response is received to the enquiry message in step 434, the external controller starts the piconet on the selected channel in step 439. If response is received, the external controller selects a new channel by collecting piconet statistics in step 435.

If all channels are exhausted and no free channel is available try to coexist with other existing piconets. If all channels have been exhausted and there is no available free channel in step 436, the external controller tries coexistence with other existing piconets. Accordingly, in step 437, the external controller determines if it can share time with other piconets. If time sharing with other piconets is not possible, the external controller selects a channel having the lowest power level in step 440. Otherwise, if time sharing with other piconets is possible, the external controller exchanges messages with the piconet for channel sharing in step 438.

Figure 45 shows the sleep and wakeup schedule with different level of power saving options. Figure 46 gives the flow chart for scheduling the sleep state in a device based on the "sleep" bit in the received POLL message.

Embodiments of the present disclosure are related to the use of an embedded system for implementing the techniques described herein. In one embodiment, the techniques are performed by the processor by using information included in the memory. Such information can be read into the main memory from another machine-readable medium, such as storage device. The information included in the memory causes the processor to perform the method described herein.

The term "machine-readable medium" as used herein refers to any medium that participates in providing data that causes a machine to operate in a specific fashion. In one embodiment which is implemented using the computer system, various machine-readable mediums are involved, for example, in providing information to the processor for execution. The machine-readable medium can be a storage media. Storage media includes both non-volatile media and volatile media. Non-volatile media includes, for example, optical or magnetic disks, such as server storage unit. Volatile media includes dynamic memory. All such media must be tangible to enable the information carried by the media to be detected by a physical mechanism that reads the information into a machine.

Common forms of machine-readable medium include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge.

In another embodiment, the machine-readable medium can be a transmission media including coaxial cables, copper wire and fiber optics, including the wires that include bus. Transmission media can also take the form of acoustic or light waves, such as those generated during radio-wave and infra-red data communications. Examples of machine-readable medium may include, but are not limited to, a carrier wave or any other medium from which a computer can read, for example, online software, download links, installation links, and online links.

In the preceding specification, the present disclosure and its advantages have been described with reference to specific embodiments. However, it will be apparent to an ordinary person skilled in the art that various modifications and changes can be made, without departing from the scope of the present disclosure. Accordingly, the specification and figures are to be regarded as illustrative examples of the present disclosure, rather than in restrictive sense. All such possible modifications are intended to be included within the scope of present disclosure.

## Claims

1. A method for managing an emergency event in a terminal apparatus, comprising:
determining whether an emergency event occurs;
selecting a channel for transmitting an alarm message indicating occurrence of an emergency event, if the emergency event occurs;
transmitting the alarm message to a coordinator using the selected channel;
determining whether a response message to the alarm message is received, for a predetermined time; and
performing an operation associated with the emergency event if the response message is received.

2. The method of claim 1, further comprising, before determining whether an emergency event occurs, operating in a poll based manner of transmitting data to the coordinator in an allocation interval upon receiving a poll message from the coordinator.

3. The method of claim 1, wherein the performing of an operation associated with the emergency event comprises transmitting emergency data to the coordinator.

4. The method of claim 1, further comprising retransmitting the alarm message if the response message is not received for the predetermined time.

5. The method of claim 4, further comprising:
determining whether the number of retransmissions of the alarm message exceeds the predetermined maximum number of retransmissions; and
selecting another channel if the number of retransmissions of the alarm message exceeds the maximum number of retransmissions.

6. The method of claim 1, wherein the selecting of a channel comprises selecting any one channel among channels supportable by the terminal apparatus or channels informed by the coordinator, according to priority.

7. The method of claim 2, wherein the poll message includes at least one of a field used for synchronization with the coordinator and a field indicating the number of allowed data frames.

8. A method for managing an emergency event in a coordinator, comprising:
transmitting, to a device, a poll message causing the device to transmit data to the coordinator;
retransmitting the poll message upon failure to receive data for the poll message;
determining whether the number of retransmissions of the poll message exceeds the predetermined maximum number of retransmissions;
transitioning to a sleep state for reception of an alarm message indicating occurrence of an emergency event, if the number of retransmissions of the poll message exceeds the maximum number of retransmissions;
upon receiving the alarm message, transmitting an acknowledgement message to the device having transmitted the alarm message; and
performing an operation associated with the emergency event.

9. The method of claim 8, further comprising storing a current Medium Access Control (MAC) state if the number of retransmissions of the poll message exceeds the maximum number of retransmissions.

10. The method of claim 9, further comprising resuming the stored MAC state upon failure to receive the alarm message within a predetermined time.

11. The method of claim 8, wherein the poll message includes at least one of a field used for synchronization with the device transmitting the data and a field indicating the number of data frames allowed for the device transmitting the data.

12. A method for managing an emergency event in a coordinator, comprising:
determining whether energy greater than or equal to a predetermined threshold is detected, in a sleep state;
selecting a channel through channel scanning upon detecting the energy greater than or equal to the predetermined threshold;
upon detecting an alarm message indicating occurrence of an emergency event, transmitting an acknowledgement message to a device having transmitted the alarm message; and
handling the emergency event.

13. A coordinator for managing an emergency event, comprising:
an energy detector for determining whether energy greater than or equal to a predetermined threshold is detected, and triggering a processor being in a sleep state upon detecting the energy greater than or equal to the predetermined threshold; and
the processor for transitioning to an on-state if triggered by the energy detector, and upon receiving an alarm message indicating occurrence of an emergency event, transmitting an acknowledgement message to a device having transmitted the alarm message, and handling the emergency event.

14. The coordinator of claim 13, further comprising a transmitter for transmitting the acknowledgement message to the device having transmitted the alarm message.

15. A coordinator for managing an emergency event, comprising:
a transmitter for transmitting, to a device, a poll message causing the device to transmit data to the coordinator;
a controller for retransmitting the poll message upon failure to receive data for the poll message, determining whether the number of retransmissions of the poll message exceeds the predetermined maximum number of retransmissions, and transitioning to a sleep state for reception of an alarm message indicating occurrence of an emergency event, if the number of retransmissions of the poll message exceeds the maximum number of retransmissions; and
a receiver for receiving the alarm message;
wherein upon receiving the alarm message, the controller transmits an acknowledgement message to the device having transmitted the alarm message, by means of the transmitter; and performs an operation associated with the emergency event.

16. The coordinator of claim 15, further comprising a storage unit for storing a current Medium Access Control (MAC) state if the number of retransmissions of the poll message exceeds the maximum number of retransmissions.

17. The coordinator of claim 16, wherein the controller resumes the stored MAC state upon failure to receive the alarm message within a predetermined time.

18. The coordinator of claim 15, wherein the poll message includes at least one of a field used for synchronization with the device transmitting the data and a field indicating the number of data frames allowed for the device transmitting the data.
